(19)

**Europäisches Patentamt**
**European Patent Office**
**Office européen des brevets**

(11) **EP 1 621 504 B1**

(12) **EUROPÄISCHE PATENTSCHRIFT**

(45) Veröffentlichungstag und Bekanntmachung des Hinweises auf die Patenterteilung:
**05.09.2007 Patentblatt 2007/36**

(51) Int Cl.:
**B66B 1/34** *(2006.01)* **G01B 7/02** *(2006.01)*

(21) Anmeldenummer: **05002553.5**

(22) Anmeldetag: **07.02.2005**

(54) **Signalband und System zum Bestimmen eines Bewegungszustandes eines bewegten Körpers**

Measuring strip and system for determining the motion of a moving object

Bande de mesure et dispositif pour déterminer le mouvement d'un object

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **27.07.2004 DE 102004037486**

(43) Veröffentlichungstag der Anmeldung:
**01.02.2006 Patentblatt 2006/05**

(73) Patentinhaber: **ThyssenKrupp Aufzüge GmbH**
**73765 Neuhausen (DE)**

(72) Erfinder:
• **Dudde, Frank**
**70191 Stuttgart (DE)**

• **Meissner, Wolfgang**
**73765 Neuhausen (DE)**
• **Thumm, Gerhard**
**70794 Filderstadt (DE)**

(74) Vertreter: **Hössle Kudlek & Partner**
**Patentanwälte,**
**Postfach 10 23 38**
**70019 Stuttgart (DE)**

(56) Entgegenhaltungen:
**WO-A-20/04106210 DE-U1- 20 311 861**
**US-A- 5 648 645**

**Beschreibung**

Die Erfindung betrifft ein langgestrecktes Signalband mit einer Mehrzahl von Signalabschnitten entlang seiner Längserstreckung, und ein System mit einem solchen Signalband zum Bestimmen eines Bewegungszustandes eines bewegten Körpers.

Bei einer Vielzahl von bewegten Körpern, wie bspw. Fördermitteln im Bereich der Automatisierungs- oder der Fördertechnik, oder in Form von Aufzügen oder dergleichen ist ein Bestimmen bzw. eine Kontrolle der Geschwindigkeit des bewegten Körpers von entscheidender Bedeutung, um einen effizienten Arbeitsablauf oder aber auch eine Sicherheit von Personen zu gewährleisten.

Bei bewegten Körpern in Form von Aufzugfahrkörben hat sich seit Jahrzehnten ein mechanisches Sicherungssystem bewährt, bei dem in Ergänzung zu den üblichen Tragseilen ein weiteres Seil an den mitfahrenden Teilen, z.B. dem Fahrkorb befestigt ist, das über eine Umlenkrolle oder über mehrere Umlenkrollen gelenkt wird.

Ein solches Sicherungssystem ist z.B. in der DE 299 12 544 U1 in der Form eines Fliehkraftbegrenzers beschrieben. Bei einer vorbestimmten Übergeschwindigkeit des Fahrkorbes von z.B. 20 % wird an z.B. einer Umlenkrolle eine Fliehkrafteinrichtung oder dergleichen ausgelöst, die die Umlenkrolle in einen Sperrzustand versetzt und dadurch eine Fangbremse auslöst. Ein solcherart bekannter einstufiger mechanischer Geschwindigkeitsbegrenzer stammt jedoch noch aus der Gründerzeit des Aufzugsbaus und unterliegt einigen Nachteilen. Diese Nachteile bestehen in der Bereitstellung der weiteren Umlenkrolle (n) und des weiteren Seiles in Verbindung mit einem erhöhten Bauraum, was den konstruktiven Aufwand der Aufzugsanlage insgesamt erhöht. Des weiteren unterliegt dieses bekannte System aufgrund des mitgeführten Sicherungsseiles und der rotierenden Umlenkrolle einer beträchtlichen Geräuschentwicklung und eignet sich nur für begrenzte Geschwindigkeiten des Fahrkorbes. Schließlich ist ein solches System wartungsaufwendig, löst im Störfall nur mit einer gewissen Verzögerung aus, arbeitet insbesondere bei Verschmutzung und Alterung sowie schlechter Wartung nur unbefriedigend, und ist in manchen Anwendungsfällen optisch störend.

In der WO 00/37348 sind weitere Sicherungssysteme für Aufzugsanlagen beschrieben, bei denen anstatt eines separaten Sicherungsseiles, das mit dem bewegten Fahrkorb mitzuführen ist, magnetische Sicherungs- bzw. Bremsvorrichtungen vorgesehen sind. Solche Systeme unterliegen jedoch dem Nachteil, daß die Sicherung des Fahrkorbes allein auf dem Magnetprinzip beruht. Somit ist bei Auswahl dieses physikalischen Prinzips keine weitere Sicherung des bewegten Fahrkorbes gewährleistet.

Ungeachtet von Sicherungssystemen für Aufzüge und dergleichen beschreibt die DE 203 11 861 0 1 eine Vorrichtung zur Position- und/oder Längenbestimmung mit einer eine absolute magnetische Längenkodierung aufweisenden Trägereinheit und einer mit der Trägereinheit zusammenwirkenden Meßeinheit. Die Meßeinheit wird relativ zu der Trägereinheit bewegt und weist eine magnetische Sensoreinheit auf, wobei sie mit einer nachgeschalteten elektronischen Auswerteeinheit verbunden ist. Die langgestreckte Trägereinheit ist einspurig mit der Längenkodierung versehen, wobei entlang der Längenkodierung eine Mehrzahl von Codierungsabschnitten mit einer regelmäßigen Polteilung vorgesehen ist. Die Positions- und/oder Längenbestimmung der Meßeinheit relativ zu der Trägereinheit beruht somit allein auf dem Bestimmen einer jeweiligen Polarität von entsprechenden Kodierungsabschnitten auf der Trägereinheit durch die relativ dazu bewegte Meßeinheit. Anders ausgedrückt, basiert die Positions- und/oder Längenbestimmung allein auf dem Prinzip des Magnetismus der Trägereinheit. Bei einer Störung des auf dieser Eigenschaft beruhenden Meßprinzips ist eine zuverlässige Position- und/oder Längenbestimmung nicht länger gewährleistet.

Die DE 197 32 713 A1 beschreibt eine Vorrichtung und ein Verfahren zur Positionsbestimmung, welche Vorrichtung bzw. welches verfahren ebenfalls auf dem Prinzip des Magnetismus basiert. Die Vorrichtung umfaßt einen einen Meßwertaufnehmer aufweisenden Meßkopf, wobei relativ zu dem Meßkopf ein Meßwertgeber bewegt wird. Der Meßwertgeber ist als langgestrecktes mittels eines magnetisierten Materials realisiertes Element ausgestaltet. In der Erstreckungsrichtung des Meßwertgebers sind parallel magnetisierte Spuren vorgesehen, die in regelmäßigen Abständen entlang der Erstreckungsrichtung eine periodische Magnetisierung entsprechend einer Polteilung aufweisen. Somit unterliegt auch diese Vorrichtung dem Nachteil, daß die Positionsbestimmung des Meßkopfes relativ zu dem Meßwertgeber allein auf dem Prinzip des Magnetismus beruht.

Entsprechend liegt der Erfindung die Aufgabe zugrunde, ein Signalband und ein System zum Bestimmen einer Position und eines Bewegungszustandes eines bewegten Körpers anzugeben, bei denen mit konstruktiv einfachen Mitteln eine wesentlich höhere Funktionssicherheit gewährleistet ist.

Erfindungsgemäß wird die Aufgabe durch ein Signalband mit den Merkmalen von Anspruch 1, durch ein System zum Bestimmen eines Bewegungszustandes eines bewegten Körpers mit den Merkmalen von Anspruch 19 und durch eine Vorrichtung zu Geschwindigkeitsbegrenzung eines bewegten Körpers mit den Merkmalen von Anspruch 29 gelöst. Vorteilhafte Weiterbildungen der Erfindung sind Gegenstand der abhängigen Ansprüche.

Das erfindungsgemäße langgestreckte Signalband weist entlang seiner Längserstreckung Signalabschnitte auf, wobei zumindest jeweils übernächst aufeinanderfolgende Signalabschnitte jeweils zumindest zwei verschiedene unterschiedlichen physikalischen Effekt beruhen und durch zumindest eine Sensoreinrichtung bestimmbar sind. Die jeweiligen Signalabschnitte können auch zumindest jeweils drei verschiedene Informationen enthalten, die jeweils auf einem entsprechenden physikalischen Effekt des Signalabschnittes beruhen. Ungeachtet der Anzahl der Informationen in einem jeweiligen Signalabschnitt lassen sich diese Informationen jeweils durch eine geeignete Sensoreinrichtung auslesen, die zumindest ein Meßelement zum Bestimmen von einer der Informationen des Signalbandes und eine Auswerteschaltung umfassen kann, wobei das Meßprinzip des Meßelementes an den jeweiligen physikalischen Effekt des Signalabschnittes angepaßt ist.

Falls die Informationen in jeweils aufeinanderfolgenden Signalabschnitten enthalten sind, sind auf dem gleichen physikalischen Effekt beruhenden Informationen in alternierenden Signalabschnitten jeweils voneinander verschieden.

In vorteilhafter Weiterbildung der Erfindung können die auf den gleichen physikalischen Effekt beruhenden Informationen in jeweils übernächst aufeinanderfolgenden Signalabschnitten miteinander übereinstimmen. Anders ausgedrückt, sind die Informationen in jeweils jedem zweiten Signalabschnitt miteinander identisch. Zweckmäßigerweise können hierbei entweder alle Signalabschnitte oder aber die Signalabschnitte mit einem jeweils übereinstimmenden physikalischen Effekt eine im wesentlichen gleiche Breite in Richtung der Längserstreckung des Signalbandes aufweisen. Hierdurch ist eine gleichmäßige Verteilung der Informationen auf dem Signalband in gleichmäßiger alternierender Abfolge sichergestellt. Alternativ hierzu ist es auch möglich, daß die Signalabschnitte mit unterschiedlichen physikalischen Effekten unterschiedliche Abmessungen aufweisen.

In vorteilhafter Weiterbildung der Erfindung kann der physikalische Effekt auf einer Strahlung beruhen, die von einem jeweiligen Signalabschnitt ausgesendet wird. Hierzu kann der Signalabschnitt mit einem aktiven Transponderband, einer Spule, einem Radio- bzw. einem Funksender, Leuchtdioden oder dergleichen versehen sein, die jeweils die Strahlung aussenden. Die Strahlung kann ein elektrisches Feld, ein magnetisches Feld und/oder ein elektromagnetisches Feld erzeugen. Durch eine geeignete Sensoreinrichtung läßt sich ein solches Feld entsprechend detektieren, woraus Rückschlüsse über die jeweiligen Informationen des Signalabschnittes gezogen werden können.

In vorteilhafter Weiterbildung der Erfindung kann der physikalische Effekt auch auf einer physikalischen Eigenschaft eines jeweiligen Signalabschnittes beruhen. Diese physikalische Eigenschaft eines jeweiligen Signalabschnittes kann eine optische Eigenschaft, eine magnetische Eigenschaft, eine Wärmeleitfähigkeit, eine Eigenschaft in Bezug auf eine Reflexion von elektromagnetischen Wellen oder dergleichen sein.

In vorteilhafter Weiterbildung können die Signalabschnitte alternierend jeweils optisch voneinander unterscheidbar sein. Eine solche Unterscheidbarkeit läßt sich etwa mittels einer geeigneten Lackierung mit zueinander kontrastreichen Farben erzielen, z.B. in den Farben Schwarz und Weiß oder dergleichen. Alternativ hierzu kann die optische Eigenschaft eines jeweiligen Signalabschnittes auch auf sonstigen optisch bestimmbaren Strukturen beruhen, wie z.B. Schraffur, Reflexion, verschiedene Farben oder dergleichen.

In vorteilhafter Weiterbildung können die Signalabschnitte alternierend eine jeweils unterschiedliche magnetische Polarisierung aufweisen. Eine Anzahl von Signalabschnitten kann z.B. eine magnetische Süd-Polarisierung aufweisen, wobei jeweils dazwischen angeordnete Signalabschnitte entsprechend eine magnetische Nord-Polarisierung aufweisen können. Eine solche alternierende Polarisierung läßt sich bspw. durch Gießen eines geeigneten Metalls erzielen. Alternativ hierzu ist gleichermaßen das Aufbringen einer magnetischen Beschichtung auf ein Substrat möglich.

In vorteilhafter Weiterbildung der Erfindung kann zumindest ein Signalabschnitt eines Paars benachbarter Signalabschnitte mit alternierend verschiedener Information jeweils mit einem Material versehen sein, das elektromagnetische Wellen unterschiedlich reflektiert. Diese Reflexionseigenschaft kann sich z.B. auf elektromagnetische Wellen mit einer Wellenlänge aus dem Bereich Ultraschall und/oder Radar beziehen. Diese physikalische Eigenschaft in bezug auf die Reflexion von elektromagnetischen Wellen kann durch ein Beschichten mit einem bestimmten Metall erzielt werden, wobei sicherzustellen ist, daß ein solches Metall die voranstehend erläuterte Magnetwirkung eines entsprechenden Signalabschnittes nicht nachteilig überlagert und somit stört.

In bezug auf die voranstehend genannte physikalische Eigenschaft kann es ausreichen, daß nur jeweils jeder zweite Signalabschnitt mit einer Schicht aus dem besagten Material versehen ist, bzw. zwei benachbarte Signalabschnitte verschieden beschichtet sind, um die gewünschte Reflexionseigenschaft in bezug auf elektromagnetische wellen zu erzielen. Alternativ hierzu ist es gleichermaßen möglich, alternierende Signalabschnitte mit jeweils einem unterschiedlichen Metall zu beschichten, die entsprechend elektromagnetische Wellen z.B. im Bereich von Ultraschall und/oder Radar unterschiedlich reflektieren. Zu diesem Zweck ist auch jedes weitere nicht metallische Material verwendbar, solange es die voranstehend erläuterte Wirkung sicherstellt. In Ergänzung zu einem Beschichten ist es auch möglich, daß das besagte Metall in einem entsprechenden Signalabschnitt neben weiteren Bereichen mit jeweils verschiedenen physikalischen Effekten angeordnet ist.

In vorteilhafter Weiterbildung der Erfindung können die Signalabschnitte alternierend jeweils eine unterschiedliche Wärmeleitfähigkeit und/oder eine unterschiedliche Temperatur aufweisen. Insbesondere bei einer unterschiedlichen Wärmeleitfähigkeit von aneinander angrenzenden Signalabschnitten lassen sich diese Signalabschnitte jeweils auf eine verschiedene Temperatur einstellen, die von einer geeigneten Sensoreinrichtung detektierbar ist.

Der wesentliche Vorteil des erfindungsgemäßen Signalbandes gegenüber herkömmlich bekannten magnetisierten Trägermaterialien liegt darin, daß die einzelnen Signalabschnitte des Signalbandes mindestens zwei voneinander verschiedene Informationen enthalten, die jeweils auf unterschiedlichen physikalischen Effekten beruhen. Diese physikalischen Effekte lassen sich mittels geeigneter Sensoreinrichtungen bestimmen, die entsprechend auf verschiedenen physikalischen Meßprinzipien beruhen. Bei einer Mehrzahl von Sensoreinrichtungen sind die Meßprinzipien der einzelnen Sensoreinrichtungen zueinander diversitär und unterliegen keiner gegenseitigen Beeinflussung. Ein Ausfall einer Sensoreinrichtung bzw. einer Bestimmung eines physikalischen Effektes eines Signalabschnittes des Signalbandes hat entsprechend keinerlei Auswirkung auf die übrigen Sensoreinrichtungen bzw. die Bestimmung eines oder der weiteren physikalischen Effekte eines jeweiligen Signalabschnittes des Signalbandes. Kommt es bspw. in der Umgebung des Signalbandes infolge eines Brandes zu einer starken Rauchentwicklung, so daß die optischen Eigenschaften der jeweiligen Signalabschnitte durch eine optische Sensoreinrichtung nicht länger bestimmt werden können, so ist trotz dieser Umstände ein Bestimmen der Nord- bzw. Süd-Polarisierung und/oder das Bestimmen einer Reflexionseigenschaft des Signalabschnittes ansprechend auf elektromagnetische Wellen oder ein weiterer physikalischer, jedoch nicht optischer Effekt weiterhin möglich. Bei einem Ausfall eines Meßprinzips durch äußere Störeinflüsse kann somit weiterhin eine Bestimmung eines weiteren physikalischen Effektes oder von zwei weiteren physikalischen Effekten eines jeweiligen Signalabschnittes des Signalbandes mittels der weiteren Sensoreinrichtungen durchgeführt werden. Hierdurch wird die Funktionssicherheit im Zusammenhang mit der Positionsbestimmung eines bewegten Körpers beträchtlich gesteigert.

Jeder Signalabschnitt kann übereinanderliegende Materialschichten aufweisen, die eine jeweils unterschiedliche physikalische Eigenschaft haben. In gleicher Weise ist es jedoch auch möglich, in einem jeweiligen Signalabschnitt nebeneinanderliegende Materialabschnitte vorzusehen, die die jeweilige physikalische Eigenschaft begründen. In weiterer Abwandlung hierzu ist es möglich, in einem jeweiligen Signalabschnitt zwei Materialabschnitte mit verschiedenen physikalischen Eigenschaften nebeneinander anzuordnen, und eine weitere Materialschicht mit einer verschiedenen physikalischen Eigenschaft darüber oder darunter anzuordnen.

In vorteilhafter Weiterbildung der Erfindung kann eine Schutzbeschichtung oder dergleichen auf eine Oberfläche des Signalbandes aufgebracht sein, welche Schutzbeschichtung abriebfest, ritzfest und/oder ölabweisend ist. Eine solche Schutzbeschichtung stellt für einen jedweden Einsatzzweck des Signalbandes mit rauhen äußeren Bedingungen sicher, daß dabei die physikalischen Effekte bzw. Eigenschaften des Signalbandes, insbesondere die optische Eigenschaft und die Eigenschaft in bezug auf eine Reflexion der elektromagnetischen Wellen, nicht durch eine mögliche Beschädigung des signalbandes beeinträchtigt werden.

Das voranstehend erläuterte Signalband eignet sich zweckmäßigerweise für ein erfindungsgemäßes System zum Bestimmen eines Bewegungszustandes eines bewegten Körpers. Ein solches System umfaßt des weiteren in Anpassung an die zumindest zwei Informationen jeweils jedes Signalabschnittes des Signalbandes zumindest zwei Sensoreinrichtungen. Die Sensoreinrichtungen weisen jeweils zumindest ein Meßelement zum Bestimmen einer der Informationen des Signalbandes und eine Auswerteschaltung auf. Ein Meßprinzip eines jeweiligen Meßelementes ist an einen der physikalischen Effekte eines jeweiligen Signalabschnittes angepaßt, wobei die Meßprinzipien der Sensoreinrichtungen diversitär zueinander sind. Hierbei können an dem bewegten Körper entweder das Signalband oder die Sensoreinrichtungen angebracht sein, so daß im Ergebnis bei einer Bewegung des Körpers das Signalband und die Sensoreinrichtungen relativ zueinander bewegbar sind.

Des weiteren umfaßt das System eine Steuereinrichtung, wobei die Auswerteschaltung einer jeweiligen Sensoreinrichtung ansprechend auf einen jeweiligen physikalischen Effekt eines Signalabschnittes ein elektrisches Signal erzeugt und an die Steuereinrichtung ausgibt. Die Steuereinrichtung ist derart beschaffen, daß auf Grundlage der elektrischen Signale der Sensoreinrichtungen eine Geschwindigkeit, eine Bewegungsrichtung und/oder eine aktuelle Position des Körpers relativ zu dem Signalband bzw. zu den Sensoreinrichtungen bestimmt werden kann. Die Sensoreinrichtungen können an dem bewegten Körper angebracht sein, wobei das Signalband stationär, z.B. in einem Aufzugsschacht angeordnet ist, so daß der Körper relativ und angrenzend zu dem Signalband bewegbar ist. Alternativ dazu kann auch das Signalband an dem Körper angebracht sein, wobei die Sensoreinrichtungen stationär z.B. in einem Aufzugsschacht oder dergleichen angebracht sind. Entsprechend ist der Körper dann relativ und angrenzend zu den Sensoreinrichtungen bewegbar.

In Anpassung an ein Signalband, bei dem jeweils jeder Signalabschnitt drei Informationen enthält, kann das System gemäß einer vorteilhaften Weiterbildung der Erfindung eine weitere Sensoreinrichtung umfassen. Die weitere Sensoreinrichtung weist in gleicher Weise zumindest ein Meßelement zum Bestimmen von einer der Informationen des Signalbandes und eine Auswerteschaltung auf, wobei das Meßprinzip des Meßelementes dieser weiteren Sensoreinrichtung an einen der physikalischen Effekte eines Signalabschnittes angepaßt ist und die Meßprinzipien der einzelnen Sensoreinrichtungen diversitär zueinander sind. Ansprechend auf einen jeweiligen Effekt eines Signalabschnittes erzeugt die weitere Sensoreinrichtung ein elektrisches Signal und gibt dieses an die Steuereinrichtung des Systems aus. Ein solches System weist somit insgesamt drei Sensoreinrichtungen auf, die zweckmäßigerweise hinsichtlich ihres Meßprinzips auf einen jeweiligen physikalischen Effekt des Signalbandes abgestimmt sind. Dieses System hat den Vorteil, daß eine Bewegung des Körpers relativ zu dem Signalband bzw. relativ zu den Sensoreinrichtungen auf Grundlage von drei verschiedenen physikalischen Meßprinzipien bestimmt werden kann, wodurch die Funktionssicherheit des Systems gesteigert ist.

Ungeachtet der Anzahl der Sensoreinrichtungen besteht ein weiterer wesentlicher Vorteil der Erfindung darin, daß die Bestimmung der physikalischen Effekte bzw. Eigenschaften des Signalbandes berührungslos erfolgen kann, wodurch ein geringer Verschleiß des Signalbandes mit einer entsprechend hohen Lebensdauer sichergestellt ist.

In vorteilhafter Weiterbildung der Erfindung kann das elektrische Signal, das durch die Auswerteschaltung einer entsprechenden Sensoreinrichtung erzeugt wird, ein Rechtecksignal sein. Die Auswerteschaltung ist hierbei so programmiert, daß die Frequenz des ausgegebenen elektrischen Signals direkt proportional zu der Geschwindigkeit des bewegten Körpers ist. Alternativ hierzu kann die Frequenz des ausgegebenen elektrischen Signals auch umgekehrt proportional zu der Geschwindigkeit des bewegten Körpers sein. Des weiteren sind die jeweiligen Sensoreinrichtungen so beschaffen, daß die zugehörige Auswerteschaltung bei einem abnormalen Betriebszustand in bezug auf das Signalband ein elektrisches Signal mit einer Störfrequenz erzeugt. Ein abnormaler Betriebszustand kann z.B. durch ein Fehlen des Signalbandes, wobei ein Bestimmen eines jeweiligen physikalischen Effektes ausbleibt, durch eine störende Verschmutzung des Signalbandes, die sich insbesondere auf die optische Eigenschaft negativ auswirkt, durch ein Signalband mit falschem Code, durch eine Unter- bzw. Überspannung einer Sensoreinrichtung, durch eine überhöhte Geschwindigkeit des Körpers oder dergleichen gegeben sein. Somit ist durch das erfindungsgemäß System nicht nur eine Positions- oder Geschwindigkeitsbestimmung des Körpers relativ zu dem Signalband bzw, zu den Sensoreinrichtungen möglich, sondern es läßt sich auch ein unzulässig großer Abstand einer jeweiligen Sensoreinrichtung in bezug auf das Signalband feststellen. Infolgedessen können geeignete Sicherheitsmaßnahmen, wie z.B. ein Stillsetzen des Körpers entweder unmittelbar nach Auftreten eines elektrischen Signals mit der Störfrequenz, oder aber alternativ an einer vorbestimmten Position eingeleitet werden.

In vorteilhafter Weiterbildung der Erfindung kann das System höchstens eine Sensoreinrichtung umfassen, die auf einem optischen Meßprinzip beruht. Bei mehr als drei Sensoreinrichtungen ist es zweckmäßig, auch mehr als einen optischen Sensor vorzusehen. Ein Bestimmen einer entsprechenden optischen Eigenschaft des Signalbandes auf Grundlage des optischen Meßprinzips hat wegen der Empfindlichkeit gegenüber einer Sichteinschränkung in Form von Dampf, Rauch oder dergleichen den Vorteil, daß sich dadurch eine Brandentwicklung in einer Umgebung des bewegten Körpers problemlos feststellen läßt. Gleichwohl reicht es im Hinblick auf das Feststellen einer möglichen Brandentwicklung oder dergleichen aus, daß höchstens eine der Sensoreinrichtungen auf dem optischen Prinzip beruht. Um der vorteilhaften Diversität der Sensoreinrichtungen zu genügen, können in diesem Fall die weiteren Sensoreinrichtungen als magnetischer Sensor und als ein Sensor zum Erfassen einer Reflexion von elektromagnetischen Wellen ausgebildet sein.

In vorteilhafter Weiterbildung der Erfindung kann die Steuereinrichtung eine Mehrzahl von Kanälen aufweisen, wobei die Sensoreinrichtungen jeweils mindestens ein elektrisches Signal erzeugen, das an die Kanäle der Steuereinrichtung angelegt wird. Zur Einhaltung von Sicherheitsvorschriften in bezug auf ein vermeiden von Störfällen, die bei manchen Anwendungen wie insbesondere Aufzugsanlagen oder dergleichen vorgeschrieben sind, können die einzelnen Kanäle in bezug auf ihre Hardware und/oder in bezug auf ihre Software diversitär zueinander sein. Anders ausgedrückt, werden bei den einzelnen Kanälen bspw. verschiedene Prozessoren eingesetzt, wodurch die Wahrscheinlichkeit eines gleichzeitigen Ausfalles der verschiedenen Prozessoren beträchtlich vermindert ist. Die Sicherheit der Positions- und/oder Geschwindigkeitsmessung des bewegten Körpers läßt sich des weiteren dadurch erhöhen, daß die einzelnen Kanäle fortwährend miteinander abgeglichen werden.

Mittels des erfindungsgemäßen Systems, das ein Signalband mit jeweils drei verschiedenen physikalischen Informationen in jedem Signalabschnitt und in Entsprechung dazu drei Sensoreinheiten mit jeweils verschiedenen Meßprinzipien umfassen kann, läßt sich eine sehr betriebssichere Positions- und/oder Geschwindigkeitsmessung des bewegten Körpers durchführen, wenn jede der Sensoreinrichtungen jeweils mindestens ein Ausgangssignal an jeden Kanal der Steuereinrichtung anlegt. Dieser Sicherheitsaspekt des Systems genügt dem Prinzip einer "2 aus 3 Auswahl", wonach also jede der drei Sensoreinrichtungen zwei Ausgangssignale an die jeweiligen Kanäle der Steuereinrichtung anlegt. Die elektrischen Signale der jeweiligen Sensoreinrichtung können entweder auf dem gleichen physikalischen Meßprinzip beruhen oder aber alternativ auf zwei verschiedenen physikalischen Meßprinzipien beruhen. Im letztgenannten Fall weist jede Sensoreinrichtung zumindest ein Meßelement basierend auf dem optischen Prinzip auf, um der Bedeutung einer möglichen Bestimmung von Bränden bzw. einer Rauchentwicklung, die insbesondere mit diesem Prinzip möglich sind, entsprechend Rechnung zu tragen.

Erfindungsgemäß ist des weiteren eine Vorrichtung zur Geschwindigkeitsbegrenzung eines bewegten Körpers vorgesehen, welche Vorrichtung ein Signalband und ein System wie voranstehend erläutert umfaßt. Die Vorrichtung weist des weiteren eine Bremsvorrichtung und/oder eine Fangvorrichtung auf, die jeweils auf den bewegten Körper einwirken können, wobei die Steuereinrichtung mit der Bremsvorrichtung und der Fangvorrichtung elektrisch verbunden ist und derart beschaffen ist, daß bei Bestimmung einer Geschwindigkeit des Körpers, die einen ersten vorbestimmten Schwellwert überschreitet, ein erstes elektrisches Steuersignal ausgegeben wird, wodurch die auf den Körper wirkende Bremsvorrichtung aktiviert wird. Des weiteren wird von der Steuereinrichtung bei Bestimmung einer Geschwindigkeit des Körpers, die einen zweiten vorbestimmten Schwellwert überschreitet, ein zweites elektrisches Steuersignal ausgegeben, wodurch die auf den Körper wirkende Fangvorrichtung aktiviert wird, die daraufhin den Körper unmittelbar stillsetzt. Eine solche Vorrichtung zur Geschwindigkeitsbegrenzung eines bewegten Körpers eignet sich vorteilhaft zum Einsatz bei Aufzugsanlagen, um die Geschwindigkeit des Fahrkorbes zu überwachen und ggf. zu begrenzen. Gegenüber dem voranstehend erläuterten herkömmlichen mechanischen Sicherungssystem für Aufzugsanlagen ist die erfindungsgemäße Vorrichtung bei einer Anwendung für Aufzugsanlagen durch einen geringeren Einbauraum, da keine Installationen in eine Kopfraumeinheit bzw. in einem Bodenbereich des Aufzugsschachtes erforderlich sind, durch eine zeitsparende und einfache Montage z.B. des Signalbandes und der Sensoreinrichtungen sowie einen geräuscharmen Betrieb infolge des berührungslosen Abtastens des Signalbandes im Vorteil.

Um bei einem Einsatz für Aufzugsanlagen oder dergleichen die Sicherheitskriterien der sogenannten Aufzugsrichtlinie zu erfüllen, kann die erfindungsgemäße Vorrichtung in vorteilhafter Weiterbildung zumindest eine Sicherheitsrelaiseinrichtung aufweisen, die zwischen die Steuereinrichtung und die Bremsvorrichtung bzw. die Fangvorrichtung geschaltet ist, wobei die elektrischen Steuersignale der Steuereinrichtung an die Sicherheitsrelaiseinrichtung angelegt sind. Für eine noch weitere Erhöhung des Sicherheitsstandards kann die Sicherheitsrelaiseinrichtung zumindest ein erstes Sicherheitsrelais und ein zweites Sicherheitsrelais umfassen, die zweckmäßigerweise mit jeweils voneinander getrennten Stromkreisen betrieben sind. Das erste Steuersignal der Steuereinrichtung wird dabei an das erste Sicherheitsrelais angelegt und das zweite Steuersignal der Steuereinrichtung wird an das zweite Sicherheitsrelais angelegt. Falls die Steuereinrichtung aufgrund einer Störung bei der Bewegung des Körpers z.B. in Form einer überhöhten Geschwindigkeit oder eines ausbleibenden Signals von einer jeweiligen Sensoreinrichtung das erste elektrische Steuersignal oder das zweite elektrische Steuersignal an ein entsprechendes Sicherheitsrelais ausgibt, um den Körper wie erforderlich abzubremsen oder gar stillzusetzen, ist ein weiterer Betrieb des Körpers erst dann möglich, wenn von dem entsprechenden Sicherheitsrelais ein Rückmeldesignal an den jeweiligen Kanal der Steuereinrichtung gesendet wird. Ein solches Rückmeldesignal wird bspw. dann generiert, wenn ein Bedienpersonal die festgestellte Störung behebt und das entsprechende Sicherheitsrelais - im Falle eines monostabilen Relais - in die Arbeitsstellung zurücksetzt.

In vorteilhafter Weiterbildung der Erfindung kann die voranstehend genannte Fangvorrichtung mit einer Aktuatoreinrichtung gekoppelt sein, die durch das zweite elektrische Steuersignal ansteuerbar ist. Beim Anlegen des zweiten elektrischen Steuersignals an die Aktuatoreinrichtung betätigt diese die Fangvorrichtung, so daß in dessen Folge der bewegte Körper bzw. der Fahrkorb der Aufzuganlage durch die Fangvorrichtung stillgesetzt wird. Die Fangvorrichtung kann bspw. aus einer herkömmlich bekannten Keilvorrichtung bestehen, die den bewegten Körper insbesondere in Form eines Aufzug-Fahrkorbes in gewohnter Weise festsetzt. Eine solche Fangvorrichtung ist im Bereich von Aufzugsanlagen seit mehreren Jahrzehnten hinreichend bekannt und deshalb an dieser Stelle nicht weiter erläutert.

Falls die Vorrichtung über mehrere Fangvorrichtungen verfügt, sind zweckmäßigerweise auch mehrere Aktuatoreinrichtungen vorgesehen, nämlich jeweils eine Aktuatoreinrichtung pro Fangvorrichtung. Bei einer Aufzugsanlage können bei Bedarf auch zwei Aktuatoreinrichtungen in einer Richtung nach unten und zwei Aktuatoreinrichtungen in der Richtung nach oben vorgesehen sein, um eine ausreichend große Stellkraft für die Fangvorrichtung bereitzustellen.

In vorteilhafter Weiterbildung der Erfindung kann die Vorrichtung ein Signalband mit jeweils drei verschiedenen Informationen pro Signalabschnitt umfassen. In Anpassung an dieses Signalband können jeweils drei Sensoreinrichtungen vorgesehen sein, die auf einem unterschiedlichen Meßprinzip zum Bestimmen der physikalischen Effekte des Signalbandes beruhen. An dem bewegten Körper sind entweder das Signalband oder die Sensoreinrichtungen angebracht. Die Steuereinrichtung der Vorrichtung ist so ausgelegt, daß bei einem fehlerhaften Signal nur einer Sensoreinrichtung bzw. bei Aussenden eines elektrischen Signals mit der Störfrequenz von nur einer Sensoreinrichtung der Körper nicht unmittelbar, sondern erst an einer vorbestimmten Position stillgesetzt wird. Hierbei kann die Steuereinrichtung das entsprechende elektrische Steuersignal zum Stillsetzen des bewegten Körpers erzeugen. Es ist darüber hinaus auch möglich, ein weiteres elektrisches Steuersignal an eine Steuerungseinheit zur Steuerung einer Bewegung des bewegten Körpers anzulegen, um infolgedessen das Stillsetzen des Körpers zu veranlassen.

Beim Einsatz der erfindungsgemäßen Vorrichtung in einer Aufzugsanlage sind somit drei Sicherheitsstufen für den Fahrbetrieb des Fahrkorbes gewährleistet. Gemäß einer ersten Sicherheitsstufe wird bei einem Ausfall von nur einer der Sensoreinrichtungen, d.h. bei Vorliegen eines elektrischen Signals mit der Störfrequenz, die Fahrt des Fahrkorbes bis zu einer nächsten Station bzw. einem nächsten Stockwerk fortgesetzt, um dort anschließend den Fahrkorb für eine weitere Überprüfung durch eine Bedienperson stillzusetzen. Aufgrund der "Sicherheitsreserve" von noch zwei weiteren Sensoreinrichtungen führt der Ausfall von nur einer Sensoreinrichtung nicht unmittelbar zu einem Nothalt des Fahrkorbes, wodurch entsprechend eine Gefährdung bzw. eine Irritation der Fahrgäste vorteilhaft vermieden werden kann.

Gemäß einer zweiten Sicherheitsstufe der erfindungsgemäßen Vorrichtung wird durch die Steuereinrichtung das erste elektrische Steuersignal zum Aktivieren der Bremsvorrichtung erzeugt, wenn auf Grundlage der elektrischen Signale von einer Sensoreinrichtung oder von vorzugsweise zwei Sensoreinrichtungen eine Geschwindigkeit bestimmt wird, die eine vorgegebene Sollgeschwindigkeit des Fahrkorbes geringfügig überschreitet. Durch das erzeugte erste elektrische Steuersignal wird wie voranstehend erläutert ein Sicherheitsstromkreis des jeweiligen Sicherheitsrelais unterbrochen, wodurch die auf den Fahrkorb wirkende Bremsvorrichtung aktiviert wird, um die Geschwindigkeit des Fahrkorbes geeignet zu verringern. Zweckmäßigerweise kann der Eingriff der Bremsvorrichtung in den Bewegungsvorgang des Fahrkorbes so eingestellt sein, daß sich nur langsam wirkende Geschwindigkeitsveränderungen ergeben.

Gemäß einer dritten Sicherheitsstufe der erfindungsgemäßen Vorrichtung wird durch die Steuereinrichtung das zweite elektrische Steuersignal zum Aktivieren der Fangvorrichtung erzeugt, wenn auf Grundlage eines elektrischen Signals von einer Sensoreinrichtung oder von vorzugsweise zwei Sensoreinrichtungen eine Geschwindigkeit des Fahrkorbes bestimmt wird, die eine vorgegebene Sollgeschwindigkeit um ein erhebliches Maß, z.B. 20 % überschreitet. Das zweite elektrische Steuersignal löst die Aktuatoreinrichtung und damit die Fangvorrichtung aus, wodurch der Fahrkorb unmittelbar stillgesetzt wird. Das Auslösen der Fangvorrichtung erfolgt jedoch ausschließlich in einem Notfall, bei dem sich der Fahrkorb z. B. aufgrund eines Seilrisses oder dergleichen in freiem Fall befindet, oder, wenn aus anderen Gründen eine Übergeschwindigkeit des Fahrkorbs entweder in Aufwärts- oder in Abwärtsrichtung aufgetreten ist.

Gemäß einem weiteren Sicherheitsaspekt der Vorrichtung wird der Körper bzw. der Fahrkorb ungeachtet einer bestimmten Geschwindigkeit auch dann stillgesetzt, wenn von zwei Sensoreinrichtungen jeweils ein elektrisches Signal mit der Störfrequenz an die Steuereinrichtung ausgegeben wird.

Wie voranstehend bereits erläutert, besteht ein allgemeiner Sicherheitsaspekt bei der erfindungsgemäßen Vorrichtung auch darin, daß das erste elektrische Steuersignal und das zweite elektrische Steuersignal zum Aktivieren der Bremsvorrichtung oder der Fangvorrichtung an jeweils voneinander getrennte Sicherheitsrelais angelegt werden, die mit einem jeweils separaten Stromkreis betrieben sind. Bei einem Ausfall des Stromkreises eines Sicherheitsrelais ist dann ein weiterer Betrieb des jeweils anderen Sicherheitsrelais gewährleistet.

In vorteilhafter Weiterbildung der Erfindung kann das elektrische Signal mit der Störfrequenz von einer der Sensoreinrichtungen in der Steuereinrichtung ein weiteres elektrisches Signal erzeugen, das an eine Steuerungseinheit zur Steuerung einer Bewegung des bewegten Körpers angelegt wird. Bei dieser steuerungseinheit kann es sich bspw. um eine zentrale Aufzugsteuerung handeln, die separat mit dem ersten Sicherheitsrelais und mit dem zweiten Sicherheitsrelais verbunden ist. Falls dieses weitere elektrische Signal an die zentrale Aufzugsteuerung angelegt ist, kann die zentrale Aufzugsteuerung in Abstimmung mit weiteren Informationen, die in der Aufzugsteuerung über die Geschwindigkeit und/oder über die Position eines Fahrkorbes vorliegen, ein weiteres Signal zum Unterbrechen eines Stromkreises des ersten Sicherheitsrelais erzeugen, um den Fahrkorb abzubremsen bzw. an einer vorbestimmten Position stillzusetzen. Alternativ oder ergänzend kann die zentrale Aufzugsteuerung auch ein sog. Servicesignal erzeugen, wodurch ein Servicepersonal über das Vorliegen des abnormalen Betriebszustandes informiert wird.

In vorteilhafter Weiterbildung der Erfindung kann das Signalband an einer Fahrbahn des bewegten Körpers angebracht sein. Beim Einsatz in einer Aufzugsanlage haftet das Signalband zweckmäßigerweise magnetisch an einer Fahrschiene des Fahrkorbes, so daß keine separaten Befestigungselemente für das Signalband erforderlich sind.

Falls das Signalband in seinen einzelnen Signalabschnitten des weiteren mit einer jeweils absoluten Codierung versehen ist, kann durch das erfindungsgemäße System nicht nur die Geschwindigkeit bzw. die Bewegungsrichtung des bewegten Körpers, sondern auch eine absolute Position des Körpers in bezug auf das Signalband bzw. die Sensoreinrichtungen bestimmt werden. Beim Einsatz eines solchen Signalbandes in einer Aufzugsanlage läßt sich somit die Position des Fahrkorbes im Aufzugsschacht nachbilden, was insbesondere den Betrieb von mehreren Fahrkörben entlang der gleichen Fahrbahn bzw. Führungsschiene ermöglicht, ohne daß dabei die Gefahr einer Kollision der Fahrkörbe miteinander besteht.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.

Figur 1 zeigt eine perspektivische Teilansicht eines erfindungsgemäßen Signalbandes.

Figur 2 zeigt das Signalband von Figur 1 in Verwendung mit einer Aufzugsanlage.

Figur 3 zeigt eine Querschnittsansicht entlang der Linie I-I von Figur 2.

Figur 4 zeigt ein Strukturdiagramm der Funktionsweise einer erfindungsgemäßen Vorrichtung zur Geschwindigkeitsbegrenzung eines bewegten Körpers, welche Vorrichtung zum Einsatz bei der Aufzugsanlage von Figur 2 vorgesehen ist.

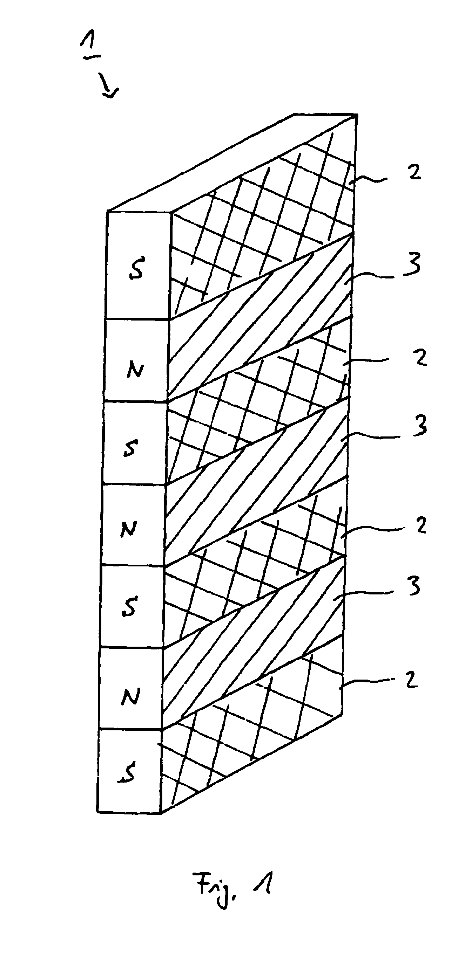

Figur 1 zeigt ein erfindungsgemäßes Signalband 1 in einer perspektivischen Teilansicht. Das Signalband 1 weist eine Längserstreckung auf, wobei entlang dieser Längserstreckung einzelne Signalabschnitte 2, 3 vorgesehen sind. Die alternierenden Signalabschnitte 2, 3 enthalten jeweils drei verschiedene Informationen, die jeweils auf physikalischen Eigenschaften des Signalbandes beruhen, nämlich eine optische Eigenschaft, eine magnetische Eigenschaft und eine Eigenschaft in bezug auf eine Reflexion von elektromagnetischen Wellen. Im einzelnen sind die Signalabschnitte so beschaffen, daß auf der gleichen Eigenschaft beruhende Informationen in alternierenden Signalabschnitten jeweils voneinander verschieden sind, wie nachstehend erläutert.

Bei der in Figur 1 gezeigten Ausführungsform sind alle Signalabschnitte 2, die jeweils übernächst aufeinander folgen, mit einer magnetischen Süd-Polarisierung ausgebildet, was durch den Buchstaben "S" kenntlich gemacht ist. Des weiteren sind die Signalabschnitte 2 mit einer Schicht aus Kupfer überzogen, wie durch Kreuzschraffur dargestellt. Durch diese Kupferschicht erhalten die Signalabschnitte 2 eine bestimmte Eigenschaft in bezug auf eine Reflexion von elektromagnetischen Wellen, bspw. von Ultraschallwellen. Schließlich sind die Signalabschnitte 2 weiß lackiert. Dadurch erhalten die Signalabschnitte 2 eine bestimmte optische Eigenschaft. In Ergänzung zu Kupfer kann auch jedes andere Metall als Beschichtung für das Signalband 1 eingesetzt werden, wenn es die genannte magnetische Eigenschaft nicht tangiert.

In Ergänzung oder in Abwandlung zu einem Beschichten eines jeweiligen Signalabschnitts ist es in gleicher Weise möglich, das Metall mit einer bestimmten Eigenschaft in bezug auf eine Reflexion von elektromagnetischen Wellen auch neben Bereichen des Signalabschnitts mit einer davon verschiedenen physikalischen Eigenschaft anzuordnen.

Die Signalabschnitte 3, die jeweils zwischen den Signalabschnitten 2 angeordnet sind, sind mit einer magnetischen Nord-Polarisierung "N" versehen. Im Unterschied zu den Signalabschnitten 2 sind die Signalabschnitte 3 nicht mit einer Schicht aus Kupfer überzogen, so daß sie sich in bezug auf eine Reflexion von Ultraschallwellen oder dergleichen von den Signalabschnitten 2 unterscheiden. Letztlich sind die Signalabschnitte 3 schwarz lackiert, wodurch sie eine optisch andere Eigenschaft als die Signalabschnitte 2 erhalten.

Die voranstehend erläuterten verschiedenen Informationen des Signalbandes 1, die auf den jeweiligen physikalischen Eigenschaften beruhen, lassen sich durch geeignete Sensoreinrichtungen bestimmen. Solche Sensoreinrichtungen umfassen ein Meßelement, dessen Meßprinzip an eine entsprechende physikalische Eigenschaft eines jeweiligen Signalabschnittes des Signalbandes angepaßt ist, und eine Auswerteschaltung, die die bestimmte Information in ein geeignetes elektrisches Signal umsetzt.

In Ergänzung zu der in Fig. 1 gezeigten Ausführungsform ist es auch möglich, daß die einzelnen Signalabschnitte eine Strahlung aussenden, durch die verschiedene physikalische Effekte erzeugt werden. Die Strahlung kann ein elektrisches Feld, ein magnetisches Feld und/oder elektromagnetisches Feld erzeugen. Hierzu können an den Signalabschnitten entsprechende technische Mittel angebracht sein, die diese Strahlung aussenden, wie z.B. ein Transponderband, eine Spule, ein Radio- bzw. Funksender, eine oder mehrere Leuchtdioden oder dergleichen. Das entsprechende Feld, das um einen jeweiligen Signalabschnitt herum erzeugt wird, läßt sich mit einer geeigneten und darauf abgestimmten Sensoreinrichtung detektieren.

Das erfindungsgemäße Signalband 1 eignet sich ausgezeichnet zum Bestimmen einer Position und einer Geschwindigkeit eines bewegten Körpers, der relativ zu dem Signalband 1 bewegt wird. Nachstehend wird der bewegte Körper beispielhaft als ein Fahrkorb einer Aufzugsanlage verstanden, ohne hierin eine Einschränkung auf nur diesen Einsatzzweck zu verstehen. In Anpassung an die jeweils drei verschiedenen Informationen pro Abschnitt des Signalbandes sind an dem Fahrkorb der Aufzugsanlage jeweils drei Sensoreinrichtungen befestigt, denen in Anpassung an die verschiedenen physikalischen Eigenschaften des Signalbandes ein unterschiedliches physikalisches Meßprinzip zugrunde liegt. Anders ausgedrückt, sind die Meßprinzipien der einzelnen Sensoreinrichtungen zueinander diversitär.

Im Fahrtbetrieb der Aufzugsanlage, wenn sich also der Fahrkorb mit den daran befestigten Sensoreinrichtungen relativ zu dem Signalband 1 bewegt, bestimmt jeweils jede Sensoreinrichtung eine Information eines entsprechenden Signalabschnittes 2, 3 des Signalbandes 1 bzw. einen Wechsel dieser Informationen. Ein solcher Wechsel der Informationen wird in den jeweiligen Auswerteschaltungen der Sensoreinrichtungen verarbeitet, die ein Rechtecksignal mit einer für sich charakteristischen geschwindigkeitsabhängigen Frequenz erzeugen. Die Auswerteschaltungen sind dabei so programmiert, daß die Frequenz des erzeugten elektrischen Signals mit zunehmender Geschwindigkeit des Fahrkorbes relativ zu dem Signalband 1 abnimmt. Die Ausgangsfrequenz des Rechtecksignals kann z.B. nach folgender Gleichung berechnet werden:

$$f = \frac{k}{Z_{0i} + v_{akt}} \, [Hz]$$

dabei ist:

f       die ausgegebene Frequenz in Hz,

$Z_{0i}$     eine für jede Sensoreinrichtung charakteristische Zahl,

$V_{akt}$     die aktuelle Geschwindigkeit der Sensoreinrichtung bzw. des Fahrkorbes relativ zum Signalband in m/s.

k       ein Proportionsfaktor und Anpassung an die Aufzugsanlage.

Indem für jede Sensoreinrichtung eine bestimmte charakteristische Zahl $Z_{0i}$ gewählt wird, erhält somit die Frequenz des Ausgangssignals einer jeweiligen Sensoreinrichtung einen bestimmten wertebereich, durch den ein Rückschluß auf die entsprechende Sensoreinrichtung möglich ist.

Gemäß der voranstehend genannten Gleichung ist die Ausgangsfrequenz des Rechtecksignales umgekehrt proportional zu der aktuellen Geschwindigkeit des Fahrkorbes.

Alternativ hierzu kann sich die Ausgangsfrequenz des Rechtecksignales jedoch auch direkt proportional zu der aktuellen Geschwindigkeit des Fahrkorbes bestimmen, nämlich nach der Gleichung:

$$f = k \, (Z_{0i} + v_{akt}) \, [Hz]$$

Die hierin genannten Größen entsprechen jeweils den Größen der voranstehend genannten Gleichung für die umgekehrte Proportionalität.

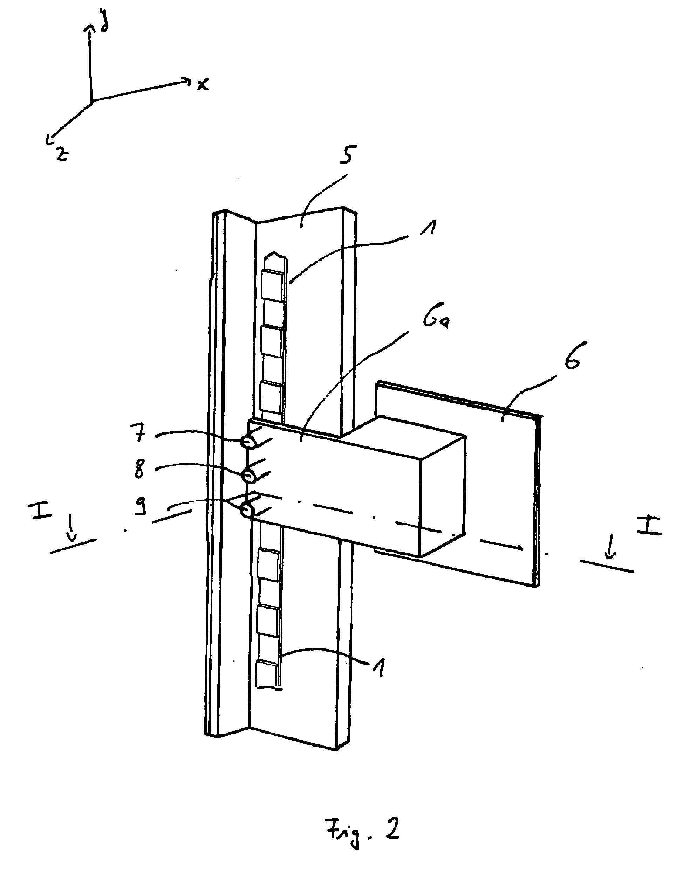

Figur 2 zeigt prinzipiell stark vereinfacht eine Aufzugsanlage 4, bei der das Signalband 1 eingesetzt ist. Das Signalband 1 ist vertikal entlang einer Fahrschiene 5 der Aufzugsanlage befestigt. Vorzugsweise haftet dabei das Signalband 1 magnetisch an der Fahrschiene 5, so daß keine zusätzlichen Befestigungsmittel zum Anbringen des Signalbandes 1 erforderlich sind. An einem Fahrkorb 6 sind mittels eines Auslegers 6a drei Sensoreinrichtungen 7, 8, 9 befestigt, wobei der Ausleger 6a geeignet derart dimensioniert ist, daß die Sensoreinrichtungen 7, 8, 9 im Fahrtbetrieb des Fahrkorbes 6 in Gegenüberstellung zu dem Signalband 1 bewegt werden können.

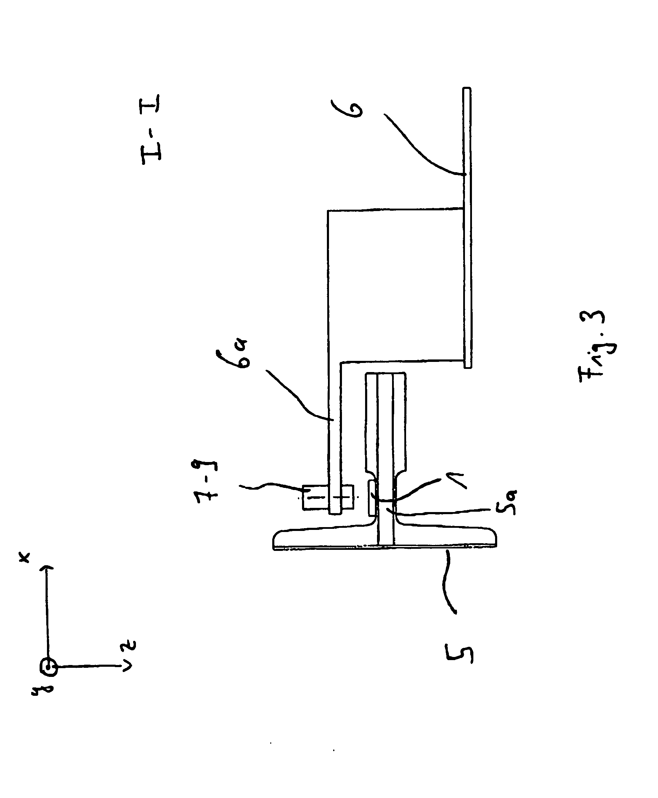

In Figur 3 ist die Fahrschiene 5 und ein Teil des Fahrkorbes 6 in einem Querschnitt entlang der Linie I-I von Figur 2 gezeigt. Die Fahrschiene 5 ist in Form eines T-Trägers ausgebildet. Das Signalband 1 haftet magnetisch an einer Oberfläche eines Mittelsteges 5a des T-Trägers an. Die an dem Ausleger 6a angebrachten Sensoreinrichtungen 7-9 sind in eine Gegenüberstellung zu dem an dem T-Träger 5 angebrachten Signalband 1 gebracht. Während eines Fahrtbetriebs der Aufzugsanlage, d.h. während einer Bewegung des Fahrkorbes in der y-Richtung von Figur 2 und Figur 3 verbleiben die Sensoreinrichtungen 7-9 in der Gegenüberstellung zu dem Signalband 1, so daß die jeweiligen Informationen des Signalbandes 1 durch die Sensoreinrichtungen 7-9 ohne Weiteres bestimmt werden können.

Die Sensoreinrichtungen 7 bis 9 beruhen jeweils wie voranstehend erläutert auf einem unterschiedlichen physikalischen Meßprinzip, jeweils in Anpassung an eine entsprechende physikalische Eigenschaft des Signalbandes 1. Im einzelnen ist die erste Sensoreinrichtung 7 als ein Magnetsensor ausgebildet, mit der eine entsprechende magnetische Polarisierung des Signalbandes 1 bestimmbar ist (z.B. mittels Hall-Effekt, GMR, AMR usw.). Die zweite Sensoreinrichtung 8 ist als ein Sensor ausgebildet, mit dem eine Eigenschaft des Signalbandes 1 in bezug auf eine Reflexion von elektromagnetischen Wellen bestimmbar ist. Hierzu weist die zweite Sensoreinrichtung 8 einen Sender auf, der elektromagnetische Wellen z.B. in Form von Ultraschallwellen in Richtung des Signalbandes 1 aussendet. Entsprechend weist die zweite Sensoreinrichtung 8 auch einen Empfänger auf, der die von dem Signalband 1 reflektierten elektromagnetischen Wellen empfängt und diese Information an eine geeignete Auswerteschaltung der zweiten Sensoreinrichtung 8 weiterleitet. Auf Grundlage der von dem Empfänger empfangenen elektromagnetischen Wellen erzeugt die Auswerteschaltung der zweiten Sensoreinrichtung 8 ein entsprechendes elektrisches Signal. Die dritte Sensoreinrichtung 9 schließlich ist als ein optischer Sensor ausgebildet, mit dem rein optische Eigenschaften des Signalbandes 1 bestimmbar sind. Im vorliegenden Beispiel spricht die dritte Sensoreinrichtung 9 auf eine Kontrastfarbe des Signalbandes 1 an, so daß die schwarze und weiße Lackierung der jeweiligen Signalabschnitte 2, 3 des Signalbandes 1 durch die dritte Sensoreinrichtung 9 bestimmbar sind. Anders ausgedrückt, sind die physikalischen Wirkprinzipien und die Auswerteschaltungen der Sensoreinrichtungen unterschiedlich. Eine mögliche Störungsart, die auf einen äußeren Einfluß zurückgehen kann, darf sich somit vorzugsweise nur auf eine einzige Sensoreinrichtung auswirken.

Die elektrischen Signale, die durch die Auswerteschaltungen der drei Sensoreinrichtungen 7 - 9 erzeugt werden, werden an eine Steuereinrichtung angelegt, die derart beschaffen ist, daß auf Grundlage der einzelnen elektrischen Signale der drei Sensoreinrichtungen 7 - 9 eine Bewegungsrichtung und/oder eine aktuelle Position des Fahrkorbes 6 relativ zu dem Signalband 1 bestimmbar ist. Das Signalband 1, die einzelnen Sensoreinrichtungen 7 - 9, die an dem Fahrkorb 6 angebracht sind, und die Steuereinrichtung sind zu einem erfindungsgemäßen System zusammengefaßt, das zum Bestimmen des Bewegungszustandes des Fahrkorbes 6 geeignet ist. Die Steuereinrichtung kann in Form eines sogenannten und nachstehend nur als solchen bezeichneten Mikro-Controllers realisiert sein, was noch im einzelnen erläutert ist.

Die einzelnen Bauelemente des erfindungsgemäßen Systems in Form der drei Sensoreinrichtungen 7 - 9 und des Mikro-Controllers, der bspw. an dem Fahrkorb 6 angebracht sein kann, sind an die im allgemeinen rauhen Einsatzbedingungen in einem Aufzugsschacht angepaßt. Die Sensoreinrichtungen und der Mikro-Controller besitzen einen vollständigen Berührungsschutz und einen Schutz gegen das Eindringen von Staub und sind darüber hinaus gegen Sprühwasser geschützt. Des weiteren sind die genannten elektrischen Bauelemente des Systems gegen wechselnde äußere Magnet felder und gegen sonstige Strahlungseinwirkungen aufgrund von Mobilfunkgeräten oder Funkgeräten geeignet abgeschirmt. Das Gehäuse der jeweiligen Bauelemente ist geeignet so isoliert, daß eine Umgebungstemperatur von z.B. -20°C bis +85°C keinen Einfluß auf eine zuverlässige Betriebsweise der Bauelemente nimmt.

Im Fahrtbetrieb des Fahrkorbes 6 ist der Abstand der jeweiligen Sensoreinrichtungen 7 - 9 von dem Signalband 1 aufgrund von im Fahrtbetrieb auftretender Schwankungen, vibrationen und dergleichen nicht konstant. Die Genauigkeit der Bestimmung der jeweiligen Informationen des Signalbandes 1 durch die Sensoreinrichtungen ist so eingestellt, daß eine Abweichung der Sensoreinrichtungen in senkrechter Richtung (z-Richtung in Figur 2 und Figur 3) und in horizontaler Richtung (y-Richtung in Figur 2 und Figur 3) zum Signalband um einige Millimeter variieren kann. Solange der Abstand der jeweiligen Sensoreinrichtung zum Signalband 1 einen Wert aus diesem Bereich einnimmt, ist der Betriebszustand der Sensoreinrichtungen normal. Erst wenn der Abstand einer jeweiligen Sensoreinrichtung zu dem Signalband 1 übermäßig groß wird und außerhalb des voranstehend genannten Bereiches liegt, ist die Betriebsposition der Sensoreinrichtungen in bezug zu dem Signalband abnormal, was von den Sensoreinrichtungen durch ein elektrisches Signal mit einer Störfrequenz angezeigt wird, wie nachstehend noch im Detail erläutert.

Der Einsatzbereich der drei Sensoreinrichtungen 7 - 9 erstreckt sich über verschiedene Geschwindigkeitsbereiche, z.B. über einen Bereich von 0 m/s bis 23 m/s. Dieser Bereich kann wiederum in mehrere Teilbereiche unterteilt sein, wobei die Sensoreinrichtungen nur jeweils einen Arbeitsbereich abzudecken brauchen. Des weiteren dürfen oszillierende Bewegungen der jeweiligen Sensoreinrichtungen in vertikaler Richtung nur soweit zu einer Frequenzänderung führen, wie diese der tatsächlichen Geschwindigkeit des Fahrkorbes 6 bzw. der Sensoreinrichtungen relativ zu dem Signalband 1 entspricht. Insbesondere darf ein Oszillieren um ein und dieselbe Flanke eines Signalabschnitts des Signalbandes 1 nicht zu einer Frequenzänderung führen. Es versteht sich, daß Bewegungen der Sensoreinrichtungen in horizontaler Richtung innerhalb des Arbeitsbereiches, in dem ein normaler Betriebszustand des Fahrkorbes sichergestellt ist, keine Frequenzänderung bewirken darf.

Im Fahrtbetrieb des Fahrkorbes 6 werden die drei Sensoreinrichtungen 7 - 9 mit einer bestimmten Geschwindigkeit entlang des Signalbandes 1 vorbeibewegt. Die jeweils erzeugten Rechtecksignale beruhen auf einem Wechsel der Informationen des Signalbandes in seinen alternierenden Signalabschnitten 2, 3. Die Ausgangsfrequenz des Rechtecksignals, das von den jeweiligen Auswerteschaltungen der Sensoreinrichtungen 7 - 9 ausgegeben wird, ist dabei gemäß den voranstehend genannten Gleichungen umgekehrt oder direkt proportional zu der Geschwindigkeit des Fahrkorbes 6.

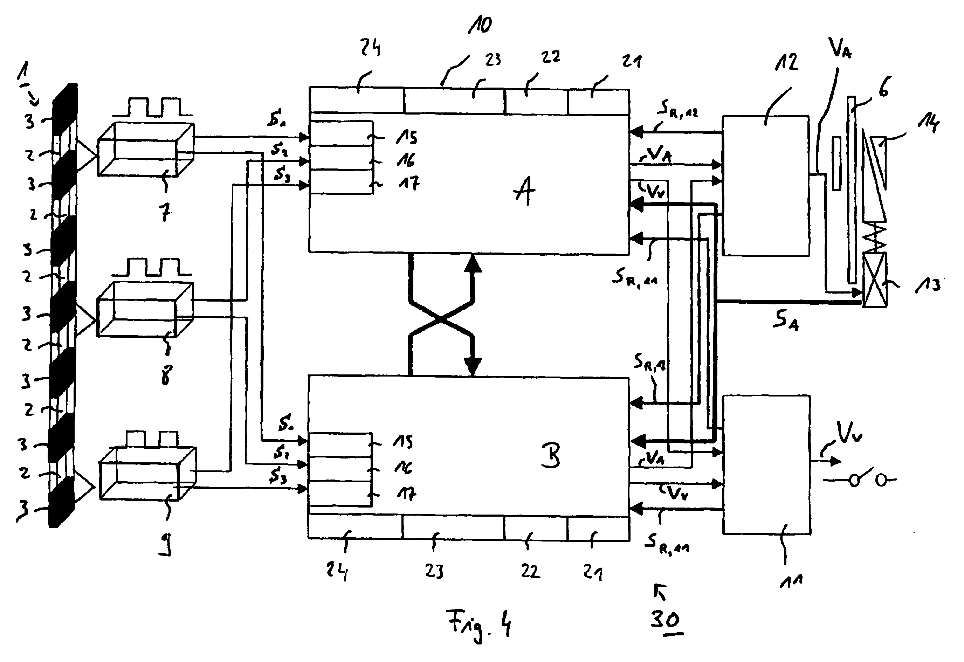

Mittels des erfindungsgemäßen Systems lassen sich demnach eine Position, eine Bewegungsrichtung und/oder eine Geschwindigkeit des Fahrkorbes 6 bestimmen. Das Signalband 1 und das System gemäß der vorliegenden Erfindung können darüber hinaus Bestandteil einer Vorrichtung zur Geschwindigkeitsbegrenzung des Fahrkorbs 6 sein, wobei eine solche Vorrichtung des weiteren eine Bremsvorrichtung und/oder eine Fangvorrichtung aufweist, die jeweils auf den Fahrkorb einwirken. Bei einer solchen Vorrichtung ist der Mikro-Controller des Systems mit der Bremsvorrichtung und der Fangvorrichtung elektrisch verbunden und derart beschaffen, daß bei Bestimmung einer Geschwindigkeit des Fahrkorbes 6, die einen ersten vorbestimmten Schwellwert überschreitet, ein erstes elektrisches Steuersignal $V_V$ ausgegeben wird, wodurch die auf den Körper wirkende Bremsvorrichtung aktiviert wird. Bei Bestimmung einer Geschwindigkeit des Fahrkorbes 6, die einen zweiten vorbestimmten Schwellwert überschreitet wird von dem Mikro-Controller ein zweites elektrisches Steuersignal $V_A$ ausgegeben, wodurch die auf den Fahrkorb wirkende Fangvorrichtung aktiviert wird und diesen augenblicklich stillsetzt. In dem Strukturdiagramm von Figur 4 ist eine solche Vorrichtung 30 in einem prinzipiellen schematischen Aufbau dargestellt.

Die Vorrichtung 30 umfaßt neben dem Signalband 1 und den Sensoreinrichtungen 7 - 9 des weiteren einen Mikro-Controller 10, eine daran angeschlossene Sicherheitsrelaiseinrichtung in Form eines ersten Sicherheitsrelais 11 und eines zweiten Sicherheitsrelais 12, eine (nicht gezeigte) Bremsvorrichtung, und einen an dem ersten Sicherheitsrelais 12 angeschlossenen Aktuator 13, der eine Fangvorrichtung 14 betätigt. Im linken Bereich von Figur 4 sind das Signalband 1 und die drei Sensoreinrichtungen 7 - 9 gezeigt, wobei die Sensoreinrichtungen 7 - 9 an dem Fahrkorb angebracht sind und in Fahrtbetrieb des Fahrkorbs an dem Signalband 1 vorbeibewegt werden. Jede der Sensoreinrichtungen 7 - 9 weist (nicht gezeigte) Meßelemente auf, die mit der zugehörigen Auswerteschaltung der Sensoreinrichtung verbunden sind. Bei einem Vorbeibewegen an dem Signalband 1 erzeugt somit jede der Sensoreinrichtungen 7 - 9 in Entsprechung zu den jeweiligen Informationen eines Signalabschnittes 2, 3 elektrische Signale, die an den Mikro-Controller 10 angelegt werden. In einem mittigen Bereich von Figur 4 ist der Mikro-Controller 10 gezeigt, der einen ersten Kanal A und einen zweiten Kanal B umfaßt. Der Aufbau des Mikro-Controllers 10 ist nachstehend noch im einzelnen erläutert. Des weiteren kann (in Fig. 4 rechts gezeigt) eine Aufzugssteuerung 31 vorgesehen sein, die jeweils mit dem Mikro-Controller 10 und dem ersten und zweiten Sicherheitsrelais 11, 12 separat verbunden ist.

Das erste Sicherheitsrelais 11 und das zweite Sicherheitsrelais 12 sind jeweils an den ersten Kanal A und an den zweiten Kanal B des Mikro-Controllers 10 angeschlossen. Das erste Sicherheitsrelais 11 ist mit dem Aktuator 13 gekoppelt, der die Fangvorrichtung 14 betätigt und diese auslösen kann. Das zweite Sicherheitsrelais 12 wirkt auf die (nicht gezeigte) Bremsvorrichtung ein und kann bei einem entsprechenden Steuersignal die Bremsvorrichtung in Betrieb setzen.

Die durch das Strukturdiagramm von Figur 4 gezeigte Vorrichtung 30 kann anstelle eines herkömmlichen mechanischen Sicherungssystems mit einem Zusatzseil wie voranstehend erläutert als Sicherungssystem z.B. für eine Aufzugsanlage eingesetzt werden, um die Geschwindigkeit des Fahrkorbes zu begrenzen bzw. zu kontrollieren. Die Vorrichtung 30 zeichnet sich gegenüber dem bekannten mechanischen System durch eine höhere Zuverlässigkeit aus, sie arbeitet auch bei höheren Geschwindigkeiten des Fahrkorbes geräuschlos, läßt sich insbesondere bei sehr hohen Gebäuden ohne weiteres einbauen bzw. nachrüsten und kann letztlich in sehr einfacher Weise in der Aufzugsanlage montiert werden. Aufgrund des Wegfalls der ansonsten erforderlichen Umlenkrollen und das Spanngewicht für das Sicherungsseil ist in einem Kopfbereich und am Fuße des Aufzugsschachtes kein gesonderter Installationsraum erforderlich, wodurch die Kosten weiter gesenkt werden können.

Der Mikro-Controller 10 enthält wie voranstehend erläutert einen ersten Kanal A und einen zweiten Kanal B. Jeweils jeder Kanal enthält jeweils drei Timer-Module 15 - 17, an die die elektrischen Signale S1 - S3 der jeweiligen Sensoreinrichtungen 7 - 9 angelegt werden. Zur Erhöhung der Betriebssicherheit der Vorrichtung sind diese beiden Kanäle mit einer unterschiedlichen Hardware ausgestaltet, bspw. mittels zwei verschiedener Prozessoren. Jeweils jeder Kanal des Mikro-Controllers 10 kann einen RAM 21, einen Flash-Memory 22, einen EEPROM 23, einen OSC-Watchdog 24, einen CAN-Modul und einzelne Timer-Module 15-17 umfassen. Der Hardware-Aufbau des Mikro-Controllers 10 entspricht einem handelsüblichen elektronischen Hauelement, wie es industriell verfügbar ist, so daß dessen Aufbau und der interne Rechenablauf im weiteren nicht näher erläutert ist.

Die elektrischen Signale der drei Sensoreinrichtungen 7 - 9 werden jeweils an die Timer-Module 15 - 17 eines jeweiligen Kanals A, B angelegt. Anschließend wird eine entsprechende Integration und Verrechnung des an die Timer-Module angelegten Rechtecksignals durchgeführt, woraus sich die Ist-Geschwindigkeit des Fahrkorbes 6 bestimmen läßt. Zur weiteren Erhöhung der Betriebssicherheit werden der erste Kanal A und der zweite Kanal B fortwährend miteinander verglichen, so daß aufgrund eines Vergleichs der Rechengrößen des ersten Kanals A bzw. des zweiten Kanals B Unterschiede der elektrischen Signale der Sensoreinrichtungen 7 - 9, die z.B. auf Fehler beruhen, frühestmöglich erkannt werden.

Das erste Sicherheitsrelais 11 und das zweite Sicherheitsrelais 12 werden aus Sicherheitsaspekten mit jeweils getrennten Stromkreisen betrieben. An jeden Kanal des Mikro-Controllers 10 können auch eine Mehrzahl von Sicherheitsrelais angeschlossen sein, die analog mit jeweils getrennten Stromkreisen betrieben werden. Die jeweiligen Sicherheitsrelais 11, 12 sind mit den einzelnen Kanälen A, B des Mikro-Controllers 10 elektrisch verbunden, so daß Steuersignale wie nachstehend noch zu erläutern von den Kanälen A, B an die entsprechenden Sicherheitsrelais 11, 12 angelegt werden können, und so daß im Gegenzug eine Rückmeldeinformation von den Sicherheitsrelais 11, 12 an den Mikro-Controller 10 gesendet werden kann.

Das zweite Sicherheitsrelais 12 ist wie voranstehend erläutert mit dem Aktuator 13 gekoppelt, der die Fangvorrichtung 14 betätigt. Bei einer solchen Fangvorrichtung 14 kann es sich um eine seit Jahrzehnten bekannte Keilvorrichtung handeln, die zum Stillsetzen des Fahrkorbs im Notfall zwischen eine Führungsschiene der Aufzugsanlage und einen Randbereich des Fahrkorbes getrieben wird. Bei einem Stillstand des Fahrkorbes 6 kann der Aktuator auch für Testzwecke durch ein elektrisches Signal $S_A$ aktiviert und deaktiviert werden. Nach Beenden des Testbetriebe kann der normale Fahrbetrieb der Aufzugsanlage wieder aufgenommen werden.

Nachstehend ist die Geschwindigkeitsbegrenzung mittels der Vorrichtung in bezug auf die Wirkungsweise des Mikro-Controllers 10 im einzelnen erläutert.

Im Fahrtbetrieb des Fahrkorbes 6 werden an die Timer-Module 15 - 17 jeweils des ersten Kanals A und des zweiten Kanals B elektrische Signale S1 - S3 angelegt. Hierbei bezeichnet das elektrische Signal S1 ein Signal der ersten Sensoreinrichtung 7, S2 ein elektrisches Signal der zweiten Sensoreinrichtung 8 und entsprechend S3 ein elektrisches Signal der dritten Sensoreinrichtung 9. Auf Grundlage der Signale S1 - S3 wird jeweils in jedem Kanal A, B des Mikro-Controllers die Ist-Geschwindigkeit des Fahrkorbes 6 bestimmt. Diese Ist-Geschwindigkeit wird anschließend mit einer voreingestellten zulässigen Soll-Geschwindigkeit verglichen, wonach ggf. weitere Steuersignale zum Ansteuern der Bremsvorrichtung oder der Fangvorrichtung 14 erzeugt werden. Falls die bestimmte Ist-Geschwindigkeit die voreingestellte Soll-Geschwindigkeit um einen ersten vorbestimmten Schwellwert, d.h. geringfügig überschreitet, erzeugen der erste Kanal A und/oder der zweite Kanal B ein erstes elektrisches Steuersignal $V_V$, das entsprechend an das erste Sicherheitsrelais 11 angelegt wird. Dies bewirkt eine Unterbrechung des Stromkreises, mit dem das erste Sicherheitsrelais 11 betrieben wird, wonach die auf den Fahrkorb 6 wirkende Bremsvorrichtung ausgelöst wird. Die Wechselwirkung der Bremsvorrichtung mit dem Fahrkorb hat zur Folge, daß eine leicht erhöhte Geschwindigkeit des Fahrkorbes 6 auf die zulässige Soll-Geschwindigkeit vermindert wird oder daß ggf. der Fahrkorb 6 abgebremst wird.

Falls die durch den Mikro-Controller 10 bestimmte Ist-Geschwindigkeit des Fahrkorbes 6 eine zulässige Soll-Geschwindigkeit um einen zweiten vorbestimmten Schwellwert, d.h. um ein erhebliches Maß überschreitet, so wird durch den ersten Kanal A und/oder den zweiten Kanal B ein zweites elektrisches Steuersignal $V_A$ erzeugt und entsprechend an das zweite Sicherheitsrelais 12 angelegt. Infolge der Kopplung zwischen dem zweiten Sicherheitsrelais 12 und dem Aktuator 13 führt dies zu einem Auslösen des Aktuators, woraufhin die Fangvorrichtung 14 betätigt wird. Das zweite elektrische Steuersignal $V_A$ wird in einer Notfallsituation erzeugt, bei der wie erläutert die bestimmte Geschwindigkeit des Fahrkorbes 6 erheblich zu groß ist. Infolgedessen wird durch die ausgelöste Fangvorrichtung 14 der Fahrkorb 6 augenblicklich stillgesetzt.

Die Ausgangssignale der Sensoreinrichtungen in Form der Rechtecksignale (in Fig. 4 links symbolisch dargestellt), die an die Timer-Elemente 15 -17 des Mikro-Controllers 10 angelegt werden, sind Pulswellen mit - in entsprechend zu der voranstehend genannten Gleichung für die umgekehrte Proportionalität - einer höchsten Frequenz bei einer Geschwindigkeit von 0 und einer sensorspezifischen geringsten Frequenz bei einer Auslösegeschwindigkeit (Überschreiten des ersten bzw. zweiten Schwellwertes) und einer sensorspezifischen höchsten Frequenz bei einer geringen Geschwindigkeit des Fahrkorbes. Wie voranstehend bereits erläutert, geben die jeweiligen Sensoreinrichtungen bei Vorliegen einer abnormalen Betriebsfunktion, z.B. bei fehlendem Signalband 1, ein elektrisches Signal mit einer Störfrequenz aus, wonach ebenfalls das zweite elektrische Steuersignal $V_A$ erzeugt werden kann.

Nach einem Auslösen der Bremsvorrichtung durch das erste Steuersignal $V_V$ oder der Fangvorrichtung 14 durch das zweite elektrische Steuersignal $V_A$ ist ein weiterer Betrieb der erfindungsgemäßen Vorrichtung erst dann möglich, wenn eine Betriebsüberprüfung durch ein Fachpersonal stattgefunden hat. Nach erfolgter Überprüfung wird ein entsprechendes Freigabesignal $S_{R, 11}$ bzw. $S_{R, 12}$ von dem jeweiligen Sicherheitsrelais 11 bzw. 12 zurück an den entsprechenden Kanal A, B gesendet, woraufhin ein normaler Fahrtbetrieb der Aufzugsanlage fortgesetzt werden kann.

Die erfindungsgemäße Vorrichtung erlaubt bei der Überwachung der Fahrkorbgeschwindigkeit drei Sicherheitsstufen. Falls z.B. nur eine Sensoreinrichtung ausfällt bzw. ein elektrisches Signal mit einer Störfrequenz an den Mikro-Controller 10 sendet, dann wird die Fahrt des Fahrkorbes 6 bis zu einem nächsten Stockwerk fortgesetzt, wobei der Fahrkorb dann an dieser Position für eine weitere Überprüfung der Anlage durch ein Fachpersonal stillgesetzt wird. Gemäß einer weiteren Sicherheitsstufe wird bei einer geringfügig überhöhten Geschwindigkeit des Fahrkorbs 6 das erste elektrische Steuersignal $V_V$ erzeugt, wodurch die Bremsvorrichtung zum Vermindern der Fahrkorbgeschwindigkeit aktiviert wird. In einer dritten Sicherheitsstufe wird bei einer wesentlich überhöhten Geschwindigkeit des Fahrkorbes 6 durch das zweite elektrische Steuersignal $V_A$ mittels des Aktuators 13 die Fangvorrichtung 14 betätigt und somit der Fahrkorb augenblicklich stillgesetzt.

Die Software des Mikro-Controllers 10 ist vorteilhaft so ausgestaltet, daß ein fehlendes Erkennen des Signalbandes z.B. infolge einer Rauchentwicklung oder einer übermäßigen Verschmutzung, was zu einem entsprechenden elektrischen Signal mit der Störfrequenz führt, nicht unmittelbar als Notfallsituation ausgelegt wird, bei der üblicherweise die Fangvorrichtung ausgelöst würde. Statt dessen wird bei dem elektrischen Signal mit der Störfrequenz von nur einer der drei Sensoreinrichtungen der normale Fahrtbetrieb des Fahrkorbes 6 bis zum nächsten Stockwerk fortgesetzt und anschließend der Fahrkorb an dieser Position für eine weitere Überprüfung stillgesetzt. Eine derart stufenweise ausgebildete Sicherheitsarchitektur der erfindungsgemäßen Vorrichtung trägt wesentlich zur Sicherheit von beförderten Fahrgästen bei, da unnötige Notfangmaßnahmen des Fahrkorbes z.B. infolge eines verschmutzten Signalbandes vermieden werden können.

Die Vorrichtung kann des weiteren so ausgelegt sein, daß bei einem elektrischen Signal mit einer Störfrequenz in der Steuerungseinrichtung 10 ein weiteres elektrisches Steuersignal erzeugt wird, das an die Aufzugssteuerung 31 angelegt wird. Die Aufzugssteuerung 31 kann anschließend unter Berücksichtigung von weiteren Informationen, die darin über den Bewegungszustand bzw. die aktuelle Position des Fahrkorbes vorliegen, eine Entscheidung darüber treffen, ob bzw. an welcher Position der Fahrkorb abgebremst bzw. stillgesetzt wird. Hierzu sendet die Aufzugssteuerung 31 ein entsprechendes Signal an das erste bzw. zweite Sicherheitsrelais 11, 12, um deren jeweiligen Stromkreise zu unterbrechen. Ergänzend oder alternativ hierzu kann die Aufzugssteuerung 31 auch ein sog. Servicesignal erzeugen, wodurch ein Servicepersonal über das Vorliegen des abnormalen Betriebszustandes in Kenntnis gesetzt wird.

Die voranstehend erläuterte Vorrichtung gewährleistet mittels des Signalbandes 1 und der damit zusammenwirkenden optischen und elektrischen Bauelemente eine wirksame Geschwindigkeitsbegrenzung bzw. Geschwindigkeitskontrolle des Aufzug-Fahrkorbes. Die Vorrichtung kann somit herkömmliche mechanische Sicherheitssysteme für eine Geschwindigkeitsbegrenzung eines Aufzuges ersetzen. Da mit dem Fahrkorb nunmehr kein Sicherheitsseil oder dergleichen mitbewegt werden muß, besteht ein wesentlicher Vorteil der Erfindung in einem verschleißarmen und geräuschlosen Betrieb in Verbindung mit möglichen höheren Endgeschwindigkeiten des Fahrkorbes in einem zulässigen Bereich. Die Vorrichtung erfüllt aufgrund des voranstehend erläuterten Sicherheitskonzeptes ohne Weiteres die Bestimmungen der Aufzugsrichtlinie als auch die dritte Sicherheitsstufe eines im Stand der Technik bekannten vierstufigen Sicherheitskonzeptes.

Das Signalband, das System und die Vorrichtung wie voranstehend erläutert können in gleicher Weise auch bei anderen Anwendungen zum Einsatz kommen, bei denen es auf eine wirksame Überwachung und ggf. Begrenzung der Geschwindigkeit eines bewegten Körpers ankommt. Die Erfindung betrifft dabei zusammenfassend die folgenden, als numerierte Punkte gefaßten Aspekte:

1. Langgestrecktes Signalband (1), das entlang seiner Längserstreckung Signalabschnitte (2, 3) aufweist, wobei zumindest jeweils übernächst aufeinanderfolgende Signalabschnitte jeweils zumindest zwei verschiedene Informationen enthalten, die jeweils auf einem physikalischen Effekt beruhen und durch zumindest eine Sensoreinrichtung bestimmbar sind.

2. Signalband (1) nach Punkt 1, bei dem die jeweils übernächst aufeinanderfolgenden Signalabschnitte (2, 3) zumindest drei verschiedene Informationen enthalten.

3. Signalband (1) nach Punkt 1 oder Punkt 2, bei dem die Informationen in jeweils aufeinanderfolgenden Signalabschnitten (2, 3) enthalten sind, wobei auf dem gleichen physikalischen Effekt beruhende Informationen in alternierenden Signalabschnitten (2, 3) jeweils voneinander verschieden sind.

4. Signalband (1) nach einem der Punkte 1 bis 3, bei dem die auf dem gleichen physikalischen Effekt beruhenden Informationen in jeweils übernächst aufeinanderfolgenden Signalabschnitten (2, 3) miteinander übereinstimmen.

5. Signalband (1) nach einem der Punkte 1 bis 4, bei dem der physikalische Effekt auf einer Strahlung beruht, die von einem jeweiligen Signalabschnitt ausgesendet wird.

6. Signalband (1) nach Punkt 5, bei dem die Strahlung ein elektrisches Feld, ein magnetisches Feld und/oder ein elektromagnetisches Feld erzeugt.

7. Signalband (1) nach einem der Punkte 1 bis 6, bei dem der physikalische Effekt auf einer physikalischen Eigenschaft eines jeweiligen Signalabschnittes beruht.

8. Signalband (1) nach Punkt 7, bei dem die physikalische Eigenschaft eines jeweiligen Signalabschnittes (2, 3) eine optische Eigenschaft, eine magnetische Eigenschaft, eine Wärmeleitfähigkeit, eine Eigenschaft in bezug auf eine Reflexion von elektromagnetischen Wellen oder dergleichen ist.

9. signalband (1) nach Punkt 8, bei dem die Signalabschnitte (2, 3) alternierend eine jeweils unterschiedliche magnetische Polarisierung aufweisen.

10. Signalband (1) nach Punkt 8 oder Punkt 9, bei dem die Signalabschnitte (2, 3) alternierend jeweils optisch voneinander unterscheidbar sind.

11. Signalband (1) nach einem der Punkte 8 bis 10, bei dem zumindest ein Signalabschnitt eines Paars benachbarter Signalabschnitte (2, 3) mit alternierend verschiedener Information mit einem Material versehen ist, das elektromagnetische Wellen im Vergleich zu dem benachbarten Signalabschnitt unterschiedlich reflektiert.

12. Signalband (1) nach Punkt 11, bei dem das Material elektromagnetische Wellen mit einer Wellenlänge aus dem Bereich Ultraschall und/oder Radar unterschiedlich reflektiert.

13. Signalband (1) nach Punkt 12, bei dem der entsprechende Signalabschnitt mit dem Material beschichtet ist.

14. Signalband (1) nach einem der Punkte 8 bis 13, bei dem die Signalabschnitte (2, 3) alternierend jeweils eine unterschiedliche Wärmeleitfähigkeit und/oder eine unterschiedliche Temperatur aufweisen.

15. Signalband (1) nach einem der Punkte 1 bis 14, bei dem die jeweiligen Informationen der Signalabschnitte (2, 3) durch die Sensoreinrichtung berührungslos bestimmbar sind.

16. Signalband (1) nach einem der Punkte 1 bis 15, bei dem die einzelnen Signalabschnitte (2, 3) jeweils eine absolute Codierung aufweisen.

17. Signalband (1) nach einem der Punkte 1 bis 16, bei dem die Signalabschnitte (2, 3) mit jeweils übereinstimmenden physikalischen Effekten eine im wesentlichen gleiche Breite in Richtung der Längserstreckung des Signalbandes (1) aufweisen.

18. Signalband (1) nach einem der Punkte 1 bis 17, bei dem auf einer Oberfläche des Signalbandes (1) eine Schutzbeschichtung aufgebracht ist, die abriebfest, ritzfest und/oder ölabweisend ist.

19. System zum Bestimmen eines Bewegungszustandes eines bewegten Körpers mit

- einem Signalband (1) nach einem der Punkte 1 bis 18,

- zumindest zwei Sensoreinrichtungen (7, 8, 9), die jeweils zumindest ein Meßelement zum Bestimmen von einer der Informationen des Signalbandes (1) und eine Auswerteschaltung umfassen, wobei ein Meßprinzip eines jeweiligen Meßelementes an einen der physikalischen Effekte des Signalabschnittes (2, 3) angepaßt ist und die Meßprinzipien der Sensoreinrichtungen (7, 8, 9) diversitär zueinander sind, und wobei das Signalband oder die Sensoreinrichtungen an dem Körper angebracht sind, so daß das Signalband und die Sensoreinrichtungen relativ zueinander bewegbar sind, und mit

- einer Steuereinrichtung (10), die mit den Sensoreinrichtungen (7, 8, 9) elektrisch verbunden ist, wobei die Auswerteschaltung einer jeweiligen Sensoreinrichtung ansprechend auf einen jeweiligen physikalischen Effekt eines Signalabschnittes (2, 3) ein elektrisches Signal erzeugt und an die Steuereinrichtung (10) ausgibt, und wobei die Steuereinrichtung (10) derart beschaffen ist, daß auf Grundlage der elektrischen Signale der Sensoreinrichtungen (7, 8, 9) eine Geschwindigkeit, eine Bewegungsrichtung und/oder eine aktuelle Position des Körpers relativ zu dem Signalband (1) oder den Sensoreinrichtungen bestimmbar ist.

20. System nach Punkt 19, bei dem eine weitere Sensoreinrichtung vorgesehen ist, die zumindest ein Meßelement zum Bestimmen von einer der Informationen des Signalbandes (1) und eine Auswerteschaltung umfaßt, wobei ein Meßprinzip des Meßelementes der weiteren Sensoreinrichtung an einen der physikalischen Effekte des Signalabschnittes (2, 3) angepaßt ist und die Meßprinzipien der Sensoreinrichtungen (7, 8, 9) diversitär zueinander sind, wobei die weitere Sensoreinrichtung ansprechend auf einen jeweiligen physikalischen Effekt eines Signalabschnittes (2, 3) ein elektrisches Signal erzeugt und an die Steuereinrichtung (10) ausgibt.

21. System nach Punkt 19 oder Punkt 20, bei dem das elektrische Signal der entsprechenden Sensoreinrichtung ein Rechtecksignal ist.

22. System nach Punkt 21, bei dem die Frequenz des Rechtecksignals direkt proportional oder umgekehrt proportional zu der Relativgeschwindigkeit zwischen dem Signalband (1) und einer entsprechenden Sensoreinrichtung (7, 8, 9) ist.

23. System nach einem der Punkte 19 bis 22, bei dem die Sensoreinrichtungen (7, 8, 9) bei einem abnormalen Betriebszustand in bezug zu dem Signalband (1) ein elektrisches Signal mit einer Störfrequenz erzeugen.

24. System nach Punkt 23, bei dem die abnormale Betriebsposition durch einen vorgegebenen Abstand zwischen zumindest einer Sensoreinrichtung und dem Signalband (1) gegeben ist.

25. System nach einem der Punkte 19 bis 24, bei dem höchstens eine der Sensoreinrichtungen (7, 8, 9) auf einem optischen Meßprinzip beruht.

26. System nach einem der Punkte 19 bis 25, bei dem die Steuereinrichtung (10) eine Mehrzahl von Kanälen (A, B) aufweist und die Sensoreinrichtungen (7, 8, 9) jeweils mindestens ein elektrisches Signal erzeugen, das jeweils an die einzelnen Kanäle der Steuereinrichtung (10) angelegt ist.

27. System nach Punkt 26, bei dem die einzelnen Kanäle in bezug auf ihre Hardware und/oder in bezug auf ihre Software diversitär zueinander sind.

28. System nach Punkt 27, bei dem die einzelnen Kanäle (A, B) fortwährend miteinander abgeglichen werden.

29. Vorrichtung zur Geschwindigkeitsbegrenzung eines bewegten Körpers, mit:

- einem System nach einem der Punkte 19 bis 28,

- einer Bremsvorrichtung und/oder einer Fangvorrichtung (14), die jeweils auf den bewegten Körper einwirken,

wobei die Steuereinrichtung (10) mit der Bremsvorrichtung und der Fangvorrichtung (14) elektrisch verbunden ist und derart beschaffen ist, daß bei Bestimmung einer Geschwindigkeit des Körpers, die einen ersten vorbestimmten Schwellwert überschreitet, ein erstes elektrisches Steuersignal ($V_V$) ausgegeben wird, wodurch die auf den Körper wirkende Bremsvorrichtung aktiviert wird, und bei Bestimmung einer Geschwindigkeit des Körpers, die einen zweiten vorbestimmten Schwellwert überschreitet, ein zweites elektrisches Steuersignal ($V_A$) ausgegeben wird, wodurch die auf den Körper wirkende Fangvorrichtung (14) aktiviert wird, die den Körper stillsetzt.

30. Vorrichtung nach Punkt 29, bei der zwischen die Steuereinrichtung (10) und die Bremsvorrichtung bzw. die Fangvorrichtung (14) jeweils zumindest eine Sicherheitsrelaiseinrichtung (11, 12) geschaltet ist, wobei die elektrischen Steuersignale der Steuereinrichtung (10) an die Sicherheitsrelaiseinrichtung (11, 12) angelegt sind.

31. Vorrichtung nach Punkt 30, bei der die Sicherheitsrelaiseinrichtung zumindest ein erstes Sicherheitsrelais (11) und ein zweites Sicherheitsrelais (12) umfaßt, wobei das erste Steuersignal ($V_V$) an das erste Sicherheitsrelais (11) und das zweite Steuersignal ($V_A$) an das zweite Sicherheitsrelais (12) angelegt sind.

32. Vorrichtung nach Punkt 31, bei dem das erste Sicherheitsrelais (11) und das zweite Sicherheitsrelais (12) mit jeweils voneinander getrennten Stromkreisen betrieben sind.

33. Vorrichtung nach Punkt 31 oder Punkt 32, mit einem System nach einem der Punkte 26 bis 28, bei der die Mehrzahl an Kanälen jeweils mit zumindest dem ersten Sicherheitsrelais (11) und dem zweiten Sicherheitsrelais (12) elektrisch verbunden ist.

34. Vorrichtung nach einem der Punkte 29 bis 33, des weiteren mit einer Aktuatoreinrichtung (13), die mit der Fangvorrichtung (14) gekoppelt und durch das zweite Steuersignal ($V_A$) ansteuerbar ist.

35. Vorrichtung nach einem der Punkte 29 bis 34, mit einem Signalband (1) nach einem der Punkte 2 bis 18 und mit einem System nach einem der Punkte 20 bis 28, bei der der Körper bei einem Einsatz von mindestens drei Sensoreinrichtungen (7, 8, 9) und bei Vorliegen eines elektrischen Signals mit einer Störfrequenz von nur einer Sensoreinrichtung nicht unmittelbar, sondern erst an einer vorbestimmten Position stillgesetzt wird.

36. Vorrichtung nach Punkt 35, bei der das elektrische Signal mit der Störfrequenz von einer der Sensoreinrichtungen (7, 8, 9) in der Steuereinrichtung (10) das zweite elektrische Signal ($V_A$) erzeugt.

37. Vorrichtung nach Punkt 35, bei der das elektrische Signal mit der Störfrequenz von einer der Sensoreinrichtungen (7, 8, 9) in der Steuereinrichtung (10) ein weiteres elektrisches Signal erzeugt, das an eine Steuerungseinheit (31) zur Steuerung einer Bewegung des bewegten Körpers angelegt wird, um den Körper an einer vorbestimmten Position stillzusetzen und/oder um ein Servicesignal oder dergleichen zu erzeugen.

38. Vorrichtung nach einem der Punkte 29 bis 37, bei der der Körper bei einem Störsignal von zwei der Sensoreinrichtungen (7, 8, 9) durch die Fangvorrichtung (14) stillgesetzt wird.

39. Vorrichtung nach einem der Punkte 29 bis 38, bei der das Signalband (1) an einer Fahrbahn des bewegten Körpers angebracht ist.

40. Vorrichtung nach Punkt 39, bei der das Signalband (1) an der Fahrbahn des bewegten Körpers magnetisch anhaftet.

41. Verwendung der Vorrichtung nach einem der Punkte 29 bis 40 zum Begrenzen der Geschwindigkeit eines Aufzug-Fahrkorbes (6).

**Patentansprüche**

1. Langgestrecktes Signalband (1), das entlang seiner Längserstreckung Signalabschnitte (2, 3) aufweist, wobei zumindest jeweils übernächst aufeinanderfolgende Signalabschnitte jeweils zumindest zwei verschiedene Informationen enthalten, die durch zumindest eine Sensoreinrichtung bestimmbar sind, **dadurch gekennzeichnet, dass** die verschiedenen Informationen jeweils auf einem unterschiedlichen physikalischen Effekt beruhen.

2. Signalband (1) nach Anspruch 1, bei dem die jeweils übernächst aufeinanderfolgenden Signalabschnitte (2, 3) zumindest drei verschiedene Informationen enthalten.

3. Signalband (1) nach Anspruch 1 oder Anspruch 2, bei dem die Informationen in jeweils aufeinanderfolgenden Signalabschnitten (2, 3) enthalten sind, wobei auf dem gleichen physikalischen Effekt beruhende Informationen in alternierenden Signalabschnitten (2, 3) jeweils voneinander verschieden sind.

4. Signalband (1) nach einem der Ansprüche 1 bis 3, bei dem die auf dem gleichen physikalischen Effekt beruhenden Informationen in jeweils übernächst aufeinanderfolgenden Signalabschnitten (2, 3) miteinander übereinstimmen.

5. Signalband (1) nach einem der Ansprüche 1 bis 4, bei dem der physikalische Effekt auf einer Strahlung beruht, die von einem jeweiligen Signalabschnitt ausgesendet wird.

6. System zum Bestimmen eines Bewegungszustandes eines bewegten Körpers mit

   - einem Signalband (1) nach einem der Ansprüche 1 bis 5,
   - zumindest zwei Sensoreinrichtungen (7, 8, 9), die jeweils zumindest ein Meßelement zum Bestimmen von einer der Informationen des Signalbandes (1) und eine Auswerteschaltung umfassen, wobei ein Meßprinzip eines jeweiligen Meßelementes an einen der physikalischen Effekte des Signalabschnittes (2, 3) angepaßt ist und die Meßprinzipien der Sensoreinrichtungen (7, 8, 9) diversitär zueinander sind, und wobei das Signalband oder die Sensoreinrichtungen an dem Körper angebracht sind, so daß das Signalband und die Sensoreinrichtungen relativ zueinander bewegbar sind, und mit

- einer Steuereinrichtung (10), die mit den Sensoreinrichtungen (7, 8, 9) elektrisch verbunden ist, wobei die Auswerteschaltung einer jeweiligen Sensoreinrichtung ansprechend auf einen jeweiligen physikalischen Effekt eines Signalabschnittes (2, 3) ein elektrisches Signal erzeugt und an die Steuereinrichtung (10) ausgibt, und wobei die Steuereinrichtung (10) derart beschaffen ist, daß auf Grundlage der elektrischen Signale der Sensoreinrichtungen (7, 8, 9) eine Geschwindigkeit, eine Bewegungsrichtung und/ oder eine aktuelle Position des Körpers relativ zu dem Signalband (1) oder den Sensoreinrichtungen bestimmbar ist.

7. System nach Anspruch 6, bei dem eine weitere Sensoreinrichtung vorgesehen ist, die zumindest ein Meßelement zum Bestimmen von einer der Informationen des Signalbandes (1) und eine Auswerteschaltung umfaßt, wobei ein Meßprinzip des Meßelementes der weiteren Sensoreinrichtung an einen der physikalischen Effekte des Signalabschnittes (2, 3) angepaßt ist und die Meßprinzipien der Sensoreinrichtungen (7, 8, 9) diversitär zueinander sind, wobei die weitere Sensoreinrichtung ansprechend auf einen jeweiligen physikalischen Effekt eines Signalabschnittes (2, 3) ein elektrisches Signal erzeugt und an die Steuereinrichtung (10) ausgibt.

8. Vorrichtung zur Geschwindigkeitsbegrenzung eines bewegten Körpers, mit:

   - einem System nach einem der Ansprüche 6 oder 7,
   - einer Bremsvorrichtung und/oder einer Fangvorrichtung (14), die jeweils auf den bewegten Körper einwirken,

wobei die Steuereinrichtung (10) mit der Bremsvorrichtung und der Fangvorrichtung (14) elektrisch verbunden ist und derart beschaffen ist, daß bei Bestimmung einer Geschwindigkeit des Körpers, die einen ersten vorbestimmten Schwellwert überschreitet, ein erstes elektrisches Steuersignal ($V_v$) ausgegeben wird, wodurch die auf den Körper wirkende Bremsvorrichtung aktiviert wird, und bei Bestimmung einer Geschwindigkeit des Körpers, die einen zweiten vorbestimmten Schwellwert überschreitet, ein zweites elektrisches Steuersignal ($V_A$) ausgegeben wird, wodurch die auf den Körper wirkende Fangvorrichtung (14) aktiviert wird, die den Körper stillsetzt.

9. Vorrichtung nach Anspruch 8, bei der zwischen die Steuereinrichtung (10) und die Bremsvorrichtung bzw. die Fangvorrichtung (14) jeweils zumindest eine Sicherheitsrelaiseinrichtung (11, 12) geschaltet ist, wobei die elektrischen Steuersignale der Steuereinrichtung (10) an die Sicherheiterelaiseinrichtung (11, 12) angelegt sind.

10. Vorrichtung nach Anspruch 9, bei der die Sicherheitsrelaiseinrichtung zumindest ein erstes Sicherheitsrelais (11) und ein zweites Sicherheitsrelais (12) umfaßt, wobei das erste Steuersignal ($V_v$) an das erste Sicherheitsrelais (11) und das zweite Steuersignal ($V_A$) an das zweite Sicherheitsrelais (12) angelegt sind.

11. Vorrichtung nach Anspruch 10, bei dem das erste Sicherheitsrelais (11) und das zweite Sicherheitsrelais (12) mit jeweils voneinander getrennten Stromkreisen betrieben sind.

12. Vorrichtung nach Anspruch 10 oder 11, bei der die Steuereinrichtung eine Mehrzahl an Kanälen umfasst, die jeweils mit zumindest dem ersten Sicherheitsrelais (11) und dem zweiten Sicherheitsrelais (12) elektrisch verbunden ist.

13. Vorrichtung nach einem der Ansprüche 8 bis 12, des weiteren mit einer Aktuatoreinrichtung (13), die mit der Fangvorrichtung (14) gekoppelt und durch das zweite Steuersignal ($V_A$) ansteuerbar ist.

14. Vorrichtung nach einem der Ansprüche 8 bis 13, mit einem Signalband (1) nach einem der Ansprüche 2 bis 5 und mit einem System nach Anspruch 7, bei der der Körper bei einem Einsatz von mindestens drei Sensoreinrichtungen (7, 8, 9) und bei Vorliegen eines elektrischen Signals mit einer Störfrequenz von nur einer Sensoreinrichtung nicht unmittelbar, sondern erst an einer vorbestimmten Position stillgesetzt wird.

15. Vorrichtung nach Anspruch 14, bei der das elektrische Signal mit der Störfrequenz von einer der Sensoreinrichtungen (7, 8, 9) in der Steuereinrichtung (10) das zweite elektrische Signal ($V_A$) erzeugt.

16. Vorrichtung nach Anspruch 14, bei der das elektrische Signal mit der Störfrequenz von einer der Sensoreinrichtungen (7, 8, 9) in der Steuereinrichtung (10) ein weiteres elektrisches Signal erzeugt, das an eine steuerungseinheit (31) zur Steuerung einer Bewegung des bewegten Körpers angelegt wird, um den Körper an einer vorbestimmten Position stillzusetzen und/oder um ein Servicesignal oder dergleichen zu erzeugen.

## Claims

1. An elongated signal strip (1), which has signal sections (2, 3) along its longitudinal extent wherein at least signal sections, following next but one after the other in each case, each contain at least two different items of information, which may be determined by at least one sensor device, **characterized in that** each of the different items of information are dependent upon a different physical effect.

2. The signal strip (1) according to claim 1, in which the signal sections (2, 3), following next but one after the other in each case, contain three different items of information.

3. The signal strip (1) according to claim 1 or claim 2, wherein the items of information are contained in signal sections (2, 3), each following one after the other, wherein items of information, dependent upon the same physical effect, differ from one another in alternating signal sections (2, 3).

4. The signal strip (1) according to any one of claims 1 to 3, in which the items of information, dependent upon the same physical effect, agree with one other in signal sections (2, 3) following next but one after the other in each case.

5. The signal strip (1) according to any one of claims 1 to 4, in which the physical effect is dependent upon radiation, which is emitted from a respective signal section.

6. A system for determining a movement condition of a moved body, comprising

   - a signal strip (1) according to any one of claims 1 to 5,
   - at least two sensor devices (7, 8, 9) which each comprise at least one measuring element for determining one of the items of information of the signal strip (1) and an evaluation circuit, wherein a measurement principle of a respective measuring element is adapted to one of the physical effects of the signal section (2, 3) and the measurement principles of the sensor devices (7, 8, 9) are diverse from one another, and wherein the signal strip or sensor devices are secured to the body so that the signal strip and sensor devices are mobile relative to each other, and comprising

   - a control device (10) which is electrically connected to the sensor devices (7, 8, 9), wherein the evaluation circuit of a respective sensor device, responding to a particular physical effect of a signal section (2, 3), produces and sends an electrical signal to the control device (10), and wherein the control device (10) is designed in such a manner that a speed, a direction of motion and/or an actual position of the body relative to the signal strip (1) or the sensor devices are determinable on the basis of the electrical signals of the sensor devices (7, 8, 9).

7. The system according to claim 6, wherein a further sensor device is provided, which comprises at least one measuring element for determining one of the items of information of the signal strip (1) and an evaluation circuit, wherein a measurement principle of the measuring element of the further sensor device is adapted to one of the physical effects of the signal section (2, 3), and the measurement principles of the sensor devices (7, 8, 9) are diverse from one another, wherein the further sensor device, responding to a particular physical effect of a signal section (2, 3), produces and sends an electrical signal to the control device (10).

8. A device for limiting the speed of a moved body, comprising:

   - a system according to either one of claims 6 or 7,
   - a braking device and/or an catching device (14) respectively acting upon the moved body, wherein the control device (10) is electrically connected to the braking device and the catching device (14) and is designed in such a manner that when a speed of the body which exceeds a first pre-set threshold value is determined, a first electrical control signal ($V_v$) is output, as the result of which the braking device acting upon the body is triggered, and when a speed of the body which exceeds a second pre-set threshold value is determined, a second electrical control signal ($V_A$) is output, as the result of which the catching device (14) acting upon the body is triggered, which stops the body.

9. The device according to claim 8, in which at least one safety relay mechanism (11, 12) is connected between the control device (10) and the braking device or the catching device (14), respectively, wherein the electrical control signals of the control device (10) are applied to the safety relay mechanism (11, 12).

10. The device according to claim 9, in which the safety relay mechanism comprises at least one first safety relay (11) and a second safety relay (12), wherein the first control signal ($V_v$) is applied to the first safety relay (11) and the second control signal ($V_A$) is applied to the second safety relay (12).

11. The device according to claim 10, in which the first safety relay (11) and the second safety relay (12) are operated with electric circuits each separate from one another.

12. The device according to claim 10 or 11, in which the control device (10) comprises a plurality of channels being electrically connected to at least the first safety relay (11) and the second safety relay (12) in each case.

13. The device according to any one of claims 8 to 12, further comprising an actuator mechanism (13) which is coupled with the catching device (14) and can be triggered by the second control signal ($V_A$).

14. The device according to any one of claims 8 to 13, with a signal strip (1) according to any one of claims 2 to 5 and with a system according to claim 7 wherein the body, if at least three sensor devices (7, 8, 9) are employed and if an electrical signal with a perturbation frequency by only one sensor device is present, is not stopped directly but only at a pre-set position.

15. The device according to claim 14, in which the electrical signal with the perturbation frequency from one of the sensor devices (7, 8, 9) in the control device (10) produces the second electrical signal ($V_A$).

16. The device according to claim 14, in which the electrical signal with the perturbation frequency from one of the sensor devices (7, 8, 9) in the control device (10) produces a further electrical signal which is applied to a control unit (31) for controlling a movement of the moved body in order to stop the body at a pre-set position and/or in order to produce a service signal or the like.

**Revendications**

1. Bande de signalisation (1) allongée, qui présente le long de son extension longitudinale des tronçons de signalisation (2, 3), au moins des tronçons de signalisation qui se suivent en second contenant chacun au moins deux différentes informations qui peuvent être déterminées par au moins un dispositif capteur, **caractérisée en ce que** les différentes informations reposent chacune sur un effet physique différent.

2. Bande de signalisation (1) selon la revendication 1, dans laquelle chaque tronçon de signalisation (2, 3) qui se suit en second comprend au moins trois informations différentes.

3. Bande de signalisation (1) selon la revendication 1 ou la revendication 2, dans laquelle les informations sont contenues dans des tronçons de signalisations (2, 3) consécutifs respectifs, des informations basées sur le même effet physique dans des tronçons de signalisation (2, 3) en alternance étant respectivement différentes les unes des autres.

4. Bande de signalisation (1) selon l'une des revendications 1 à 3, dans laquelle les informations basées sur le même effet physique dans des tronçons de signalisation (2, 3) qui se suivent en second coïncident les unes aux autres.

5. Bande de signalisation (1) selon l'une des revendications 1 à 4, dans lequel l'effet physique repose sur un rayonnement qui est émis par un tronçon de signalisation respectif.

6. Système pour déterminer un état de mouvement d'un corps en mouvement, comportant

   - une bande de signalisation (1) selon l'une des revendications 1 à 5,
   - au moins deux dispositifs capteurs (7, 8, 9) qui comprennent chacun au moins un élément de mesure pour déterminer une des informations de la bande de signalisation (1) et un circuit d'évaluation, un principe de mesure d'un élément de mesure respectif étant adapté à un des effets physiques du tronçon de signalisation (2, 3), et les principes de mesure des dispositifs capteurs (7, 8, 9) étant diversitaires les uns par rapport aux autres, et la bande de signalisation ou les dispositifs capteurs étant appliqués au corps de telle sorte que la bande de signalisation et les dispositifs capteurs peuvent être déplacés les uns par rapport aux autres, et comportant
   - un dispositif de commande (10) qui est relié électriquement aux dispositifs capteurs (7, 8, 9), le circuit d'évaluation d'un dispositif capteur respectif engendrant, en réponse à un effet physique respectif d'un tronçon de signalisation (2, 3), un signal électrique qu'il fournit au dispositif de commande (10), et le dispositif de commande (10) étant réalisé de telle sorte que sur la base des signaux électriques des dispositifs capteurs (7, 8, 9), on peut déterminer une vitesse, une direction de mouvement et/ou une position actuelle du corps par rapport à la bande de signalisation (1) ou par rapport aux dispositifs capteurs.

7. Système selon la revendication 6, dans lequel il est prévu un autre dispositif capteur qui comprend au moins un élément de mesure pour déterminer une des informations de la bande de signalisation (1) et un circuit d'évaluation, un principe de mesure de l'élément de mesure de l'autre dispositif capteur étant adapté à un des effets physiques du tronçon de signalisation (2, 3) et les principes de mesure des dispositifs capteurs (7, 8, 9) étant diversitaires les uns par rapport aux autres, l'autre dispositif capteur engendrant, en réponse à un effet physique respectif d'un tronçon de signalisation (2, 3), un signal électrique qu'il fournit au dispositif de commande (10).

8. Dispositif de limitation de vitesse d'un corps en mouvement, comportant :

   - un système selon l'une des revendications 6 ou 7,
   - un dispositif de freinage et/ou un dispositif parachute (14) qui agissent chacun sur le corps en mouvement,

   le dispositif de commande (10) étant relié électriquement au dispositif de freinage et au dispositif parachute (14) et réalisé de telle sorte que lors de la détermination d'une vitesse du corps, qui dépasse une première valeur seuil prédéterminée, il est fourni un premier signal de commande électrique (VV), grâce à quoi le dispositif de freinage agissant sur le corps est activé, et lors de la détermination d'une vitesse du corps, qui dépasse une deuxième valeur seuil prédéterminée, il est fourni un deuxième signal de commande électrique (VA), grâce à quoi le dispositif parachute (14) agissant sur le corps est activé et arrête le corps.

9. Dispositif selon la revendication 8, dans lequel entre le dispositif de commande (10) et le dispositif de freinage ou le dispositif parachute (14) est intercalé au moins un dispositif de relais de sécurité (11, 12) respectif, les signaux de commande électriques du dispositif de commande (10) étant appliqués au dispositif de relais de sécurité (11, 12).

10. Dispositif selon la revendication 9, dans lequel le dispositif de relais de sécurité comprend au moins un premier relais de sécurité (11) et un deuxième relais de sécurité (12), le premier signal de commande (VV) étant appliqué au premier relais de sécurité (11), et le deuxième signal de commande (VA) étant appliqué au deuxième relais de sécurité (12).

11. Dispositif selon la revendication 10, dans lequel le premier relais de sécurité (11) et le deuxième relais de sécurité (12) fonctionnent avec des circuits séparés l'un de l'autre.

12. Dispositif selon la revendication 10 ou 11, dans lequel le dispositif de commande comprend une pluralité de canaux qui est reliée électriquement à au moins le premier relais de sécurité (11) et le deuxième relais de sécurité (12).

13. Dispositif selon l'une des revendications 8 à 12, comportant par ailleurs un dispositif actionneur (13) qui est accouplé au dispositif parachute (14) et qui peut être piloté par le deuxième signal de commande (VA).

14. Dispositif selon l'une des revendications 8 à 13, comportant une bande de signalisation (1) selon l'une des revendications 2 à 5 et un système selon la revendication 7, dans lequel le corps est arrêté non pas directement, mais seulement au niveau d'une position déterminée, en cas de mise en oeuvre d'au moins trois dispositifs capteurs (7, 8, 9) et en présence d'un signal électrique avec une fréquence perturbatrice de seulement un dispositif capteur.

15. Dispositif selon la revendication 14, dans lequel le signal électrique, avec la fréquence perturbatrice de l'un des dispositifs capteurs (7, 8, 9) dans le dispositif de commande (10), engendre le deuxième signal électrique (VA).

16. Dispositif selon la revendication 14, dans lequel le signal électrique, avec la fréquence perturbatrice de l'un des dispositifs capteurs (7, 8, 9) dans le dispositif de commande (10), engendre un autre signal électrique qui est appliqué à une unité de commande (31) pour commander un mouvement du corps en mouvement, pour arrêter le corps à une position prédéterminée et/ou pour engendrer un signal de service ou similaire.

Fig. 1

Fig. 2

Fig. 3

EP 1 621 504 B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29912544 U1
- WO 0037348 A
- DE 2031186101
- DE 19732713 A1